(19) Europäisches Patentamt
European Patent Office
Office européen des brevets

(11) Veröffentlichungsnummer: **0 082 117**
**B1**

# (12) EUROPÄISCHE PATENTSCHRIFT

(45) Veröffentlichungstag der Patentschrift: **10.04.85**

(51) Int. Cl.⁴: **C 09 B 45/26**, C 09 B 55/00 // D06P1/10

(21) Anmeldenummer: **82810537.9**

(22) Anmeldetag: **09.12.82**

(54) **Chromkomplexe von Polyazofarbstoffen.**

(30) Priorität: **15.12.81 CH 7993/81**

(43) Veröffentlichungstag der Anmeldung: **22.06.83 Patentblatt 83/25**

(45) Bekanntmachung des Hinweises auf die Patenterteilung: **10.04.85 Patentblatt 85/15**

(84) Benannte Vertragsstaaten: **BE CH DE FR GB IT LI**

(56) Entgegenhaltungen:
**CH - A - 392 730**
**CH - A - 444 996**
**GB - A - 1 116 060**
**GB - A - 1 197 265**
**US - A - 3 975 369**

(73) Patentinhaber: **CIBA-GEIGY AG, Postfach, CH-4002 Basel (CH)**

(72) Erfinder: **Back, Gerhard, Dr., Hammerstrasse 5, D-7850 Lörrach (DE)**
Erfinder: **Beffa, Fabio, Dr., Burgstrasse 38, CH-4125 Riehen (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

EP 0 082 117 B1

## Beschreibung

Gegenstand der vorliegenden Erfindung sind Chromkomplexfarbstoffe der Formel I

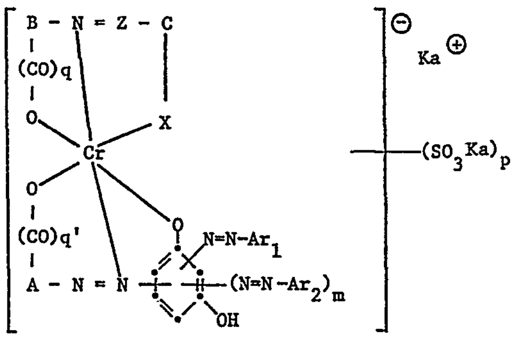

(I)

worin

Z Stickstoff oder eine –CH-Gruppe,

A den Rest einer Diazokomponente der Benzol- oder Naphthalinreihe, welcher die Hydroxy- oder Carboxygruppe in o-Stellung zur Azogruppe trägt,

B einen Rest der Benzol- oder Naphthalinreihe, welcher in o-Stellung zur Azo- oder Azomethingruppe eine Hydroxy- oder Carboxygruppe trägt, oder, falls q = 1 ist und Z eine –CH-Gruppe darstellt, den Rest einer aliphatischen, cycloaliphatischen oder aromatischen Aminocarbonsäure,

C den Rest einer Kupplungskomponente, wenn Z Stickstoff ist, wobei die Kupplungskomponente in o- bzw. α-Stellung zur Azogruppe die Gruppe X enthält und ausser der Gruppe X keine Hydroxygruppe oder unsubstituierte Aminogruppe aufweist, falls C eine Kupplungskomponente der Benzolreihe ist, oder den Rest eines o-Hydroxyaldehyds, wenn Z die –CH-Gruppe darstellt,

X Sauerstoff oder, wenn Z Stickstoff ist, auch eine Gruppe der Formel –NR–, worin R Wasserstoff oder eine $C_1$-$C_4$-Alkylgruppe bedeutet,

$Ar_1$ und $Ar_2$ unabhängig voneinander je ein gegebenenfalls substituierter Benzol- oder Naphthalinrest oder ein heterocyclischer Rest ist,

m 0 bis 1,

q und q' unabhängig voneinander 0 oder 1,

p eine ganze Zahl von 0 bis 6, und

$Ka^{\oplus}$ eine Kation bedeuten.

Es sind bereits 1:2-Chromkomplexfarbstoffe beschrieben, welche Resorcin als Kupplungskomponente enthalten. In der Regel handelt es sich dabei um symmetrische Komplexe, bei denen die beiden Azofarbstoffe identisch sind und jeweils Resorcin als Kupplungskomponente aufweisen.

Es wurde nun gefunden, dass Überraschenderweise solche asymmetrischen 1:2-Chromkomplexfarbstoffe besonders wertvolle Eigenschaften besitzen, die aus einem Dis- oder Trisazofarbstoff mit Resorcin als mittlerer Kupplungskomponente und einem Azomethinfarbstoff oder einem Azofarbstoff, dessen Kupplungskomponente keine Hydroxygruppe ausgenommen einer metallisierbaren Hydroxygruppe aufweist, bestehen.

In den erfindungsgemässen Chromkomplexfarbstoffen der obigen Formel I können die Reste A und B noch einen oder mehrere weitere Substituenten tragen, z.B. niedermolekulares Alkyl oder Alkoxy, Halogen, wie z.B. Chlor, Brom, Nitro, Cyano, Sulfo, Carboxy, Phosphono, Alkylsulfonyl, wie z.B. Methylsulfonyl, Sulfamide, wie z.B. Sulfamid oder Sulfomethylamid, oder Acylamino. Unter niedermolekularen Alkyl- oder Alkoxygruppen sind in dieser Anmeldung generell solche mit 1 bis 6, vorzugsweise 1 bis 2 C-Atomen zu verstehen und mit Acylamino werden niedrig-molekulare Alkanoylamino-, Alkylsulfonylamino- und Alkoxycarbonylaminoreste sowie Sulfonylamino-, Aroylamino- und Arylsulfonylaminoreste bezeichnet.

Die Reste A und B leiten sich beispielsweise von folgenden Aminen ab:

Anthranilsäure,
4- oder 5-Chloranthranilsäure,
4- oder 5-Sulfoanthranilsäure,
2-Amino-3-napthoesäure,
2-Amino-1-hydroxybenzol,
4-Chlor- und 4,6-Dichlor-2-amino-1-hydroxybenzol,
4- oder 5-Nitro-2-amino-1-hydroxybenzol,
4-Chlor-, 4-Methyl- und 4-Acetylamino-6-nitro-2-amino-1-hydroxybenzol,
6-Acetylamino- und 6-Chlor-4-nitro-2-amino-1-hydroxybenzol,
4-Cyan-2-amino-1-hydroxybenzol,
4-Sulfonamido-2-amino-1-hydroxybenzol,
1-Hydroxy-2-aminobenzol-4-sulfoanthranilid,
4-Methoxy-2-amino-1-hydroxybenzol,
4-Methoxy-5-chlor-2-amino-1-hydroxybenzol,
4-Methyl-2-amino-1-hydroxybenzol,
4-Chlor-5-nitro-2-amino-1-hydroxybenzol,
3,4,6-Trichlor-2-amino-1-hydroxybenzol,
6-Acetylamino-4-chlor-2-amino-1-hydroxybenzol,
4,6-Dinitro-2-amino-1-hydroxybenzol,
2-Amino-1-hydroxybenzol-4- oder -5-sulfonsäure,
4-Nitro-2-amino-1-hydroxybenzol-6-sulfosäure,
5-Nitro- oder 6-Nitro-2-amino-1-hydroxybenzol-4-sulfosäure,
4-Chlor-2-amino-1-hydroxybenzol-6-sulfosäure,
1-Amino-2-hydroxynaphthalin-4-sulfosäure,
1-Amino-2-hydroxy-6-nitronaphthalin-4-sulfosäure,
1-Amino-2-hydroxy-6-chlor- oder -6-brom-naphthalin-4-sulfosäure,
1-Amino-2-hydroxynaphthalin-4,6-disulfosäure,
2-Amino-1-hydroxybenzol-4,6-disulfosäure,
6-Chlor-2-amino-1-hydroxybenzol-4-sulfosäure.

Statt der oben genannten Amine mit Hydroxygruppe kommen für A und B auch entsprechende Methoxyverbindungen oder entsprechende Verbindungen, deren Hydroxygruppe tosyliert wurde, in Betracht, wie Anisidin, 4- oder 5-Chloranisidin, 4- oder 5-Nitroanisidin, Anisidin-4- oder -5-sulfosäure, oder tosyliertes 1-Hydroxy-2-aminobenzol, wobei die Methoxy- oder O-Tosylgruppe bei der Metallisierung in eine OH-Gruppe umgewandelt wird. Verbindungen mit diesen Gruppen werden vor allem dann eingesetzt, wenn die entsprechenden 1-Hydroxy-2-aminoverbindungen schlecht kuppeln.

Ausserdem kann B, falls q = 1 ist und Z eine −CH-Gruppe darstellt, auch den Rest einer aliphatischen oder cycloaliphatischen Aminosäure darstellen. Geeignete Aminosäuren sind z.B.: Glykokoll, α-Alanin, β-Alanin, Phenylglycin, Phenylalanin, 2-Aminocyclohexancarbonsäure.

In bevorzugten Farbstoffen sind A und B unabhängig voneinander je der Rest eines 1-Hydroxy-2-aminobenzols oder 1-Amino-2-hydroxynaphthalins, welcher gegebenenfalls durch Halogen, Nitro und/oder Sulfo substituiert ist, insbesondere der Rest eines 1-Amino-2-hydroxy-4-sulfonaphthalins, welcher gegebenenfalls in 6-Stellung durch Halogen, wie Brom oder insbesondere Chlor, Nitro oder Sulfo substituiert ist.

Der Rest C leitet sich vorzugsweise von folgenden Gruppen von Kupplungskomponenten ab: gegebenenfalls durch niedermolekulares Alkyl oder Alkoxy, Dialkylamino, oder Acylamino substituierte, in o-Stellung kuppelnde Phenole, wobei Acylamino, $C_1$-$C_4$-Alkanoylamino-, $C_1$-$C_4$-Alkylsulfonylamino-, $C_1$-$C_4$-Alkoxycarbonylamino-, Aroylamino- oder Arylsulfonylaminoreste bedeutet; Naphthole, die gegebenenfalls mit $C_1$-$C_4$-Alkyl oder Alkoxy, Chlor, Amino, Acylamino oder Sulfo substituiert sind, wobei Acylamino dieselbe Bedeutung hat, die vorne angegeben ist; 5-Pyrazolone oder 5-Aminopyrazole, die in 1-Stellung einen gegebenenfalls mit Chlor, Nitro, $C_1$-$C_4$-Alkyl- oder Alkoxygruppen oder Sulfogruppen substituierten Phenyl- oder Naphtylrest besitzen und in 3-Stellung eine $C_1$-$C_4$-Alkyl- oder Carboxygruppe, insbesondere eine Methylgruppe aufweisen; Naphthylamine, die gegebenenfalls mit Sulfo-, Sulfonamido- oder Sulfongruppen substituiert sind; Acetessigsäureamide, vor allem Acetessigsäureanilide, und Benzoylessigsäureanilide, die im Anilidkern gegebenenfalls mit Chlor, Brom, Nitro, $C_1$-$C_4$-Alkyl- oder Alkoxy- oder Sulfogruppen substituiert sein können; 6-Hydroxy-3-cyano- oder 6-Hydroxy-3-carbonamido-4-alkyl-2-pyridone, die in 1-Stellung durch gegebenenfalls substituiertes $C_1$-$C_4$-Alkyl, z.B. Methyl, Isopropyl, β-Hydroxyethyl, β-Aminoethyl oder γ-Isopropoxypropyl oder durch Phenyl substituiert sind, und in 4-Stellung eine $C_1$-$C_4$-Alkylgruppe, insbesondere Methyl, tragen können, oder Hydroxychinoline.

Beispiele solcher Kupplungskomponenten sind
2-Naphthol,
1-Naphthol,
1-Acetylamino-7-naphthol,
1-Propionylamino-7-naphthol,
1-Carbomethoxyamino-7-naphthol,
1-Carboethoxyamino-7-naphthol,
1-Carbopropoxyamino-7-naphthol,
6-Acetyl-2-naphthol,
2-Naphthol-3-, -4-, -5-, -6-, -7- oder -8-sulfosäure,
1-Naphthol-3-, -4- oder -5-sulfosäure,
4-Methyl-1-naphthol,
4-Methoxy-1-naphthol,
4-Acetyl-1-naphthol,
5,8-Dichlor-1-naphthol,
5-Chlor-1-naphthol,
2-Naphthylamin,
2-Naphthylamin-1-sulfosäure,
1-Naphthylamin-4- oder -5-sulfosäure,
2-Aminonaphthalin-6-sulfosäure,
2-Aminonaphthalin-5-sulfosäure,
6-Methylsulfonyl-2-aminonaphthalin,
1-Phenyl-3-methylpyrazol-5-on,
1-Phenyl-5-pyrazolon-3-carbonsäureamid,
1-(2'-, 3'- oder 4'-Methylphenyl)-3-methylpyrazol-5-on,
1-(2'-, 3'- oder 4'-Sulfophenyl)-3-methylpyrazol-5-on,
1-(2'-Chlor-5'-sulfophenyl)-3-methylpyrazol-5-on,
1-(2'- oder 4'-Methoxyphenyl)-3-methylpyrazol-5-on,
1-(2'-, 3'- oder 4'-Chlorphenyl)-3-methylpyrazol-5-on,
1-(2'-, 3'- oder 4'-Nitrophenyl)-3-methylpyrazol-5-on,
1-(2'-, 5'- oder 3',4'-Dichlorphenyl)-3-methylpyrazol-5-on,
1-(2',5'-Dichlor-4'-sulfophenyl)-3-methylpyrazol-5-on,
1-(2'-, 3'- oder 4'-Sulfophenyl)-3-methyl-5-aminopyrazol,
1-Phenyl-3-methyl-5-aminopyrazol,
1-(2'-Chlor-5'-sulfophenyl)-3-methyl-5-aminopyrazol,
Acetoacetanilid,
Acetoacetanilid-4-sulfosäure,
Acetoacet-o-anisidid,
Acetoacet-o-toluidid,
Acetoacet-o-chloranilid,
Acetoacet-m-xylidid,
Tetralol,
4-Methylphenol,
3-Dialkylaminophenole, besonders
3-Dimethylamino- und 3-Diethylaminophenol,
4-Butylphenol,
vorzugsweise 4-tert.-Butylphenol,
4-Amylphenol,
insbesondere 4-t-Amylphenol,
2-Isopropyl-4-methylphenol,
2- oder 3-Acetylamino-4-methylphenol,
2-Methoxycarbonylamino-4-methylphenol,
2-Ethoxycarbonylamino-4-methylphenol und
3,4-Dimethylphenol,
1-Methyl-3-cyano-4-ethyl-6-hydroxypyridon,
1-Methyl-3-cyano-4-methyl-6-hydroxypyridon,
1-Phenyl-3-carbonamido-4-methyl-6-hydroxypyridon,
1-Ethyl-4-hydroxy-2-chinolon.

Vorzugsweise stellt die Kupplungskomponente C ein gegebenenfalls durch Amino und/oder Sulfo substituiertes 1- oder 2-Naphthol, 1- oder 2-Naphthylamin, gegebenenfalls substituiert durch Sulfo-, p-Alkyl-($C_1$-$C_6$)-phenol, 1-Phenyl-3-methyl-5-pyrazolon oder Acetessigsäureanilid dar, wobei die Phenylgruppe in den beiden letztgenannten Verbindungen durch $C_1$-$C_4$-Alkyl, $C_1$-$C_4$-Alkoxy, Chlor oder Sulfo substituiert sein kann.

Sofern Z die −CH-Gruppe ist, stellt C den Rest eines o-Hydroxyaldehyds dar, vorzugsweise eines

o-Hydroxybenzaldehyds oder o-Hydroxynaphthaldehyds, welcher durch niedrigmolekulares Alkyl, Halogen, Sulfo, Phenylazo, Sulfophenylazo, Naphthylazo oder Sulfonaphthylazo substituiert sein kann. Geeignete Aldehyde sind beispielsweise:

2-Hydroxy-1-naphthaldehyd,
1-Hydroxy-2-naphthaldehyd,
2-Hydroxybenzaldehyd,
3- und 5-Methyl-2-hydroxybenzaldehyd,
3,5-Dimethyl-2-hydroxybenzaldehyd,
5-Butyl-2-hydroxybenzaldehyd,
5-Chlor- oder 5-Brom-2-hydroxybenzaldehyd,
3-Chlor-2-hydroxybenzaldehyd,
3,5-Dichlor-2-hydroxybenzaldehyd,
5-Sulfo-2-hydroxybenzaldehyd,
3-Methyl-5-chlor-2-hydroxybenzaldehyd,
5-(Phenylazo)-2-hydroxybenzaldehyd,
5-(2'-, 3'- oder 4'-Sulfophenylazo)-2-hydroxybenzaldehyd,
5-(6'-Sulfonaphthyl-1'-azo)-2-hydroxybenzaldehyd oder
5-(4''-Sulfo-4'-phenylazo)phenylazo-2-hydroxybenzaldehyd.

$Ar_1$ und $Ar_2$ sind unabhängig voneinander je ein Benzol- oder Naphthalinrest oder ein heterocyclischer Rest und können die bei Diazokomponenten üblichen Substituenten tragen. Wenn $Ar_1$ oder $Ar_2$ ein heterocyclischer Rest ist, so handelt es sich z.B. um einen Thiazolyl-, Benzthiazolyl-, Imidazolyl-, Chinolinyl-, Oxazolyl- oder Benzoxazolylrest.

Vorzugsweise sind $Ar_1$ und $Ar_2$ jedoch ein gegebenenfalls mit Chlor, Brom, Nitro, Sulfo, Sulfamoyl, N-mono- oder N,N-dialkyliertem Sulfamoyl, Alkylsulfonyl, Alkyl oder Alkoxy substituierter Phenyl- oder ein gegebenenfalls mit Sulfo substituierter Naphthylrest.

m bedeutet eine Zahl zwischen 0 und 1, d.h. dass der Rest $-N=N-Ar_2$ auch in nichtstöchiometrischer Menge im Farbstoff der Formel I anwesend sein kann. Es handelt sich also um Gemische von Farbstoffen mit diesem Rest und solchen ohne diesen Rest.

$Ka^{\oplus}$ bedeutet vorzugsweise Lithium, Kalium oder vor allem Natrium. Ausserdem kann $Ka^{\oplus}$ ein Ammoniumkation oder das Ammoniumsalz eines organischen Amins sein.

Besonders bevorzugte erfindungsgemässe Farbstoffe entsprechen der Formel II

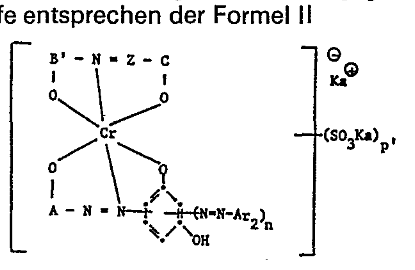

(II)

worin

Z Stickstoff oder eine CH-Gruppe,

A den Rest einer Diazokomponente der Benzol- oder Naphthalinreihe, welche die Hydroxygruppe in o-Stellung zur Azogruppe trägt,

B' einen Rest der Benzol- oder Naphthalinreihe, welcher die Hydroxygruppe in o-Stellung zur Azo- oder Azomethingruppe trägt,

C den Rest einer Kupplungskomponente, wenn Z Stickstoff ist, wobei die Kupplungskomponente in o- bzw. α-Stellung zur Azogruppe die Hydroxygruppe trägt und ausser der metallisierten keine weitere Hydroxygruppe und keine unsubstituierte Aminogruppe aufweist, falls C eine Kupplungskomponente der Benzolreihe ist, oder den Rest eines o-Hydroxyaldehyds, wenn Z die CH-Gruppe darstellt und

$Ar_2$ ein gegebenenfalls substituierter Benzol- oder Naphthalinrest oder ein heterocyclischer Rest,

n eine Zahl zwischen 1 und 2,

p' 2, 3 oder 4, und

$Ka^{\oplus}$ ein Kation ist.

Unter diesen sind diejenigen der Formel II besonders bevorzugt, worin A und B' unabhängig voneinander je den Rest eines 1-Hydroxy-2-aminobenzols oder 1-Amino-2-hydroxynaphthalins bedeuten, welcher gegebenenfalls durch Halogen, Nitro und/oder Sulfo substituiert ist, Z Stickstoff und C ein gegebenenfalls durch Amino und/oder Sulfo substituiertes 1- oder 2-Naphthol, 1- oder 2-Naphthylamin, gegebenenfalls substituiert durch Sulfo, p-Alkyl-($C_1$-$C_6$)-phenol, 1-Phenyl-3-methyl-5-pyrazolon oder Acetessigsäureanilid darstellt, wobei die Phenylgruppe in den beiden letztgenannten Verbindungen durch $C_1$-$C_4$-Alkyl, $C_1$-$C_4$-Alkoxy, Chlor oder Sulfo substituiert sein kann, oder Z eine −CH-Gruppe und C den Rest eines o-Hydroxybenzaldehyds oder o-Hydroxynaphthaldehyds darstellt, welcher durch niedrigmolekulares Alkyl, Halogen, Sulfo, Phenylazo, Sulfophenylazo, Naphthylazo oder Sulfonaphthylazo substituiert sein kann, $Ar_2$ ein gegebenenfalls mit Chlor, Brom, Nitro, Sulfo, Sulfamoyl, N-mono- oder N-N-dialkyliertem Sulfamoyl, Alkylsulfonyl, Alkyl oder Alkoxy substituierter Phenyl- oder ein gegebenenfalls mit Sulfo substituierter Naphthylrest ist, p' 2, 3 oder 4 und $Ka^{\oplus}$ ein Kation bedeutet.

Von diesen sind diejenigen der Formel II zum Färben von Leder besonders geeignet, worin A und B' unabhängig voneinander je den Rest eines 1-Amino-2-hydroxy-4-sulfonaphthalins darstellen, welcher gegebenenfalls in 6-Stellung durch Halogen, Nitro oder Sulfo substituiert ist, und die übrigen Symbole die vorstehend angegebene Bedeutung aufweisen.

Wegen ihres guten Deckvermögens auf Leder und der guten Echtheiten der erhaltenen Färbungen sind die Farbstoffe der Formel III

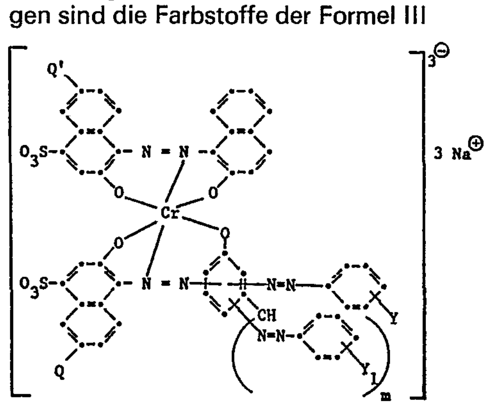

(III)

worin Y und $Y_1$ unabhängig voneinander je Wasserstoff, Chlor, Methyl, Ethyl, Methoxy, Ethoxy, Sulfo oder Nitro und Q und Q' unabhängig voneinander je Wasserstoff oder Nitro und m 0 bis 1 bedeuten, besonders geeignet.

Besonders bevorzugt unter diesen sind diejenigen, bei denen Q und Q' Nitro und Y und $Y_1$ Chlor bedeuten.

Die erfindungsgemässen Farbstoffe können nach an sich bekannten Methoden hergestellt werden, beispielsweise indem man den 1:1-Chromkomplex eines Farbstoffes der Formel IV

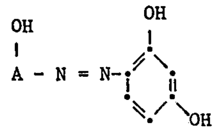
(IV)

oder eines Farbstoffes der Formel V

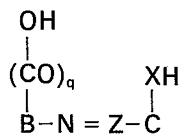
(V)

herstellt, diesen dann mit einem nicht metallisierten Farbstoff der Formel V bzw. IV zum asymmetrischen 1:2-Chromkomplex umsetzt, wobei man entweder vorgängig den Farbstoff der Formel IV oder den 1:1-Komplex dieses Farbstoffes oder anschliessend den gebildeten 1:2-Komplex mit 1 bis 2 mol einer Diazoniumverbindung der Formel VI

$$Y^{\ominus}\ N\equiv\overset{\oplus}{N}-Ar_2 \text{ und/oder } Y^{\ominus}\ N\equiv\overset{\oplus}{N}-Ar_1 \quad \text{(VI)}$$

kuppelt. A, B, C, Z, X, q, $Ar_1$ und $Ar_2$ weisen die unter der Formel I angegebenen Bedeutungen auf und $Y^{\ominus}$ bedeutet ein Anion, beispielsweise Chlorid. Es ist auch möglich, Gemische von 2 oder mehreren verschiedenen Diazoniumverbindungen einzusetzen.

Vorzugsweise setzt man einen Farbstoff der Formel IV mit dem 1:1-Chromkomplex eines Farbstoffes der Formel V zum 1:2-Chromkomplex um und kuppelt anschliessend mit einer Diazoniumverbindung der Formel VI.

Bei der Kupplung einer Diazoniumverbindung der Formel VI mit einem Monoazofarbstoff der Formel IV bzw. Chromkomplexen, enthaltend diesen Farbstoff, werden die Diazoniumverbindung und der Farbstoff bzw. der Chromkomplex im Verhältnis von 1:1 bis etwa 2:1 eingesetzt, so dass eine bis zwei Azogruppen eingeführt werden. Bei einem Verhältnis von 1:1 entsteht jedoch normalerweise keine reine Verbindung, sondern ein Gemisch, welches einen Anteil an Verbindung mit 2 neu eingeführten Azogruppen sowie unverändertem Farbstoff der Formel IV bzw. Chromkomplexen, enthaltend diesen Farbstoff, aufweist.

Eine bevorzugte Herstellungsweise für die erfindungsgemässen Farbstoffe besteht darin, dass man ein Gemisch aus einem Azofarbstoff der Formel IV und einem Azo- oder Azomethinfarbstoff der Formel V mit einem Chromierungsmittel umsetzt und anschliessend mit einer Diazoniumverbindung der Formel VI kuppelt, so dass man Mischungen von 1:2-Chromkomplexen erhält. Diese Mischungen bestehen aus dem unsymmetrischen 1:2-Chromkomplex der Formel I sowie symmetrischen 1:2-Komplexen, enthaltend 2 Moleküle Farbstoff der Formel IV bzw. V. Vorzugsweise setzt man bei dieser Herstellungsweise die Farbstoffe der Formeln IV und V im Verhältnis 20:80 bis 80:20, insbesondere 40:60 bis 60:40 ein. Die gemäss dieser Herstellungsweise erhältlichen Mischungen von 1:2-Chromkomplexen stellen einen bevorzugten Gegenstand der vorliegenden Erfindung dar.

Die Kupplungsreaktion und die Chromierung werden nach den üblichen Methoden durchgeführt.

Die nach den obigen Verfahren erhältlichen, neuen Metallkomplexfarbstoffe werden vorteilhaft in Form ihrer Salze, insbesondere Alkali-, wie Lithium-, Kalium-, vor allem aber Natriumsalze, oder auch Ammoniumsalze isoliert. Sie eignen sich zum Färben der verschiedensten natürlichen oder synthetischen, Stickstoff- und Hydroxygruppen enthaltenden Materialien wie Polyamiden oder Polyurethanen, insbesondere aber zum Färben von Wolle oder vor allem Leder.

Die Metallkomplexfarbstoffe der Formel I, welche nur 0 bis 2 Sulfogruppen besitzen, werden gegebenenfalls auch als Aminsalze isoliert. Diese eignen sich z.B. zum Aufsprühen auf Leder sowie zum Färben von organischen Flüssigkeiten, Lakken und Polymeren.

Die neuen Farbstoffe sind farbstark und decken gut. Sie haben ein gutes Ziehvermögen bei gleichzeitig guten Echtheiten, wie Wasch-, Wasser-, Schweiss-, Reib-, Diffusions-, Licht-, Säure- und Alkaliechtheit, sowie Säure- und Alkalistabilität. Besondere Erwähnung verdient das gute Aufbauvermögen auf diversen Ledersorten, sowohl auf nur mit Chromsalzen gegerbtem Leder wie auch auf mit vegetabilen oder synthetischen Gerbstoffen nachgegerbtem Leder. Man erhält kräftige braune, olive, graue und schwarze Nuancen.

In den nachfolgenden Beispielen bedeuten die Teile, sofern nichts anderes angegeben wird, Gewichtsteile und die Prozente Gewichtsprozente. Die Temperaturen sind in Grad Celsius angegeben.

In den Beispielen sind die Azobindungen zum Resorcin in den Fällen fixiert gezeichnet, wo sich die Verbindungsstelle für das Hauptprodukt nach dem heutigen Stand der Kenntnisse mit einiger Sicherheit angeben lässt. Durch die angegebenen Formeln sollen jedoch auch die entsprechenden Stellungsisomeren, welche in mehr oder weniger grossem Anteil entstehen, mit umfasst sein.

*Beispiel 1:*

40,5 Teile des nach bekanntem Verfahren erhältlichen Monoazofarbstoffs aus 1-Diazo-2-hydroxy-6-nitronaphthalin-4-sulfonsäure und 1,3-Dihydroxybenzol werden in 500 Teilen Wasser von 60° suspendiert und durch Zugabe von 30 Teilen einer 2N-Schwefelsäure auf pH 2 angesäuert. Nach Eintragen von 22 Teilen basischem

Chrom(III)sulfat wird das Reaktionsgemisch zum Sieden erhitzt und anschliessend so lange unter Rückfluss gerührt, bis der metallfreie Monoazofarbstoff nicht mehr nachweisbar ist.

Nach Abkühlen auf 50° wird der in kristalliner Form ausgefallene, rotviolette 1:1-Chromkomplex des Monoazofarbstoffs durch Filtration isoliert und mit verdünnter Natriumchloridlösung säurefrei gewaschen.

Der als Filterpaste vorliegende 1:1-Chromkomplex wird unter Rühren in 1000 Teilen Wasser suspendiert und durch Zutropfen einer 15%igen Natriumhydroxidlösung in eine rotviolette, klare Lösung von pH 9 bis 9,5 überführt. Nach Zugabe von 250 Teilen Eis wird unter zusätzlichem Kühlen im Eiswasserbad eine in üblicher Weise aus 11,6 Teilen 1-Aminobenzol hergestellte Lösung von Benzoldiazoniumchlorid zugetropft und hierbei gleichzeitig durch Einstreuen von wasserfreiem Natriumcarbonat ein pH von 8,5 bis 9,5 eingehalten. Der entstehende, blauschwarze 1:1-Chromkomplex des Disazofarbstoffs fällt im Verlaufe einiger Stunden teilweise aus und wird durch Zugabe von Natriumchlorid vollständig abgeschieden. Die nach Filtration vorliegende Farbstoffpaste wird mit verdünnter Natriumchloridlösung gewaschen, gepresst und erneut in 2000 Teilen Wasser von 90° angerührt. Die erhaltene Suspension wird unter Rühren bei 90 bis 95° und Einhaltung von pH 7,0 bis 7,5 mit ca. 40 Teilen des in üblicher Weise zugänglichen Monoazofarbstoffs aus 1-Diazo-2-hydroxy-6-nitronaphthalin-4-sulfonsäure und 2-Hydroxynaphthalin versetzt, wobei Umsetzung zum einheitlichen, asymmetrischen Chromkomplex der folgenden Konstitution erfolgt

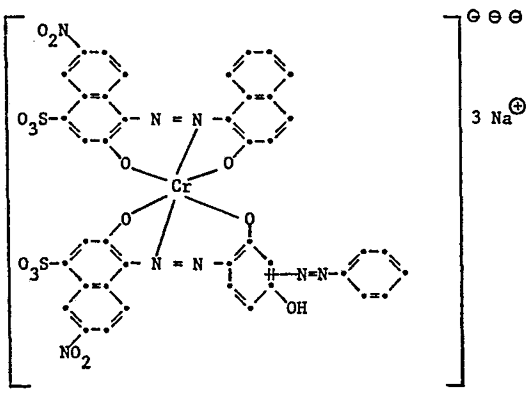

Die Anlagerung wird dünnschichtchromatographisch verfolgt und nötigenfalls durch Zugabe weiteren metallfreien Monoazofarbstoffs korrigiert, bis beide Komponenten des Mischkomplexes vollständig verbraucht sind.

Der als tiefschwarze Lösung vorliegende, neue Komplexfarbstoff wird bei 50° durch Einstreuen von Natriumchlorid abgeschieden, durch Filtration isoliert und nach Waschen mit verdünnter Natriumchloridlösung im Vakuum bei 80° getrocknet. Die Ausbeute beträgt ca. 130 Teile eines gut wasserlöslichen Farbstoffs, der Chromleder und nachgegerbtes Leder nach den im Färbebeispiel angegebenen Verfahren in gut deckenden, echten Schwarznuancen färbt.

*Beispiel 2:*

43,9 Teile des nach bekanntem Verfahren erhältlichen Monoazofarbstoffs aus 1-Diazo-2-hydroxy-6-nitronaphthalin-4-sulfonsäure und 2-Hydroxynaphthalin in Form des 1:1-Chromkomplexes und 40,5 Teile des in Beispiel 1 erwähnten Monoazofarbstoffs aus 1-Diazo-2-hydroxy-6-nitronaphthalin-4-sulfonsäure und 1,3-Dihydroxybenzol werden zusammen in 1000 Teilen Wasser von 70° suspendiert. Das Reaktionsgemisch wird durch Zutropfen von 1 N-Natriumhydroxidlösung auf einen pH-Wert von 6,5 bis 7,5 eingestellt und anschliessend bei einer Temperatur von 90 bis 95° gerührt, bis beide Ausgangsstoffe nicht mehr nachweisbar sind.

Die entstandene, tiefviolette Lösung des einheitlich-asymmetrischen Chromkomplexes wird auf 0 bis 3° gekühlt und mit 12 Teilen wasserfreiem Natriumcarbonat versetzt, wobei eine rotviolette Lösung von pH 9,0 bis 9,5 entsteht. Anschliessend wird eine in üblicher Weise aus 11,6 Teilen Aminobenzol hergestellte Lösung von Benzoldiazoniumchlorid bei 0 bis 5° zugetropft und gleichzeitig mit einer 4N-Natriumcarbonatlösung der pH-Wert bei 8,5 bis 9,5 gehalten.

Sobald die Kupplung beendet ist, wird die vorliegende, tiefschwarze Lösung auf 50° erwärmt und die Isolierung des Farbstoffs nach den Angaben des Beispiels 1 vorgenommen. Der erhaltene Farbstoff ist dünnschichtchromatographisch und koloristisch mit dem im Beispiel 1 beschriebenen Komplex identisch.

*Beispiel 3:*

Der Monoazofarbstoff aus 1-Diazo-2-hydroxy-6-nitronaphthalin-4-sulfonsäure und 1,3-Dihydroxybenzol in Form des im Beispiel 1 beschriebenen 1:1-Chromkomplexes wird mit dem metallfreien Monoazofarbstoff aus 1-Diazo-2-hydroxy-6-nitronaphthalin-4-sulfonsäure und 2-Hydroxynaphthalin, wie im Beispiel 2 beschrieben, zum einheitlichen Mischkomplex umgesetzt und dieser mit einer aus 13,95 Teilen 1-Aminobenzol erhaltenen Lösung von Benzoldiazoniumchlorid gekuppelt. Es entsteht ein ähnlicher Komplexfarbstoff wie in den Beispielen 1 und 2.

Wird die Kupplung des Mischkomplexes mit der Diazoniumverbindung aus 15,6 Teilen 4-Chlor-1-aminobenzol vorgenommen, so wird ein konstitutionell analoger Farbstoff erhalten, der Leder in vollen Schwarztönen färbt.

*Beispiel 4:*

40,5 Teile des nach bekanntem Verfahren erhältlichen Monoazofarbstoffs aus 1-Diazo-2-hydroxy-6-nitronaphthalin-4-sulfonsäure und 1,3-Dihydroxybenzol werden in 500 Teilen Wasser suspendiert. Nach Zugabe von 40 Teilen kristallisiertem Natriumacetat und Kühlen auf 3 bis 8° wird unter Rühren die in üblicher Weise erhaltene Lösung der Diazoniumverbindung aus 25,5 Teilen 4-Chlor-1-aminobenzol zugetropft. Während einigen Stunden wird durch Eintragen von ca. 20 Teilen Natriumacetat ein pH-Wert von 5 eingehalten und die Kupplung durch weiteres Rühren vervollständigt. Der olivgrüne Trisazofarbstoff der Konstitution

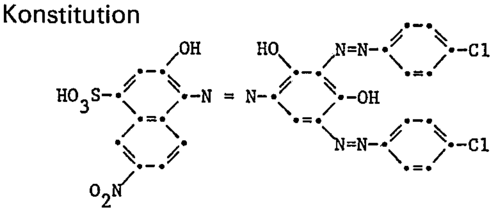

fällt hierbei vollständig aus. Er wird durch Filtration isoliert und mit verdünnter Natriumchloridlösung gewaschen.

Der erhaltene, metallfreie Trisazofarbstoff wird anschliessend nach den Angaben des Beispiels 2 mit 43,9 Teilen des Monoazofarbstoffs aus 1-Diazo-2-hydroxy-6-nitronaphthalin-4-sulfonsäure und 2-Hydroxynaphthalin in Form des 1:1-Chromkomplexes zum einheitlichen asymmetrischen Komplex der Beispiel 1 analogen Konstitution umgesetzt und wie beschrieben abgeschieden, isoliert und getrocknet. Die Ausbeute beträgt ca. 140 Teile eines gut wasserlöslichen Farbstoffs, der auf Chromleder wie auf nachgegerbtem Leder volle, grünstichige Schwarzfärbungen ergibt.

*Beispiel 5:*

35,5 Teile des nach bekanntem Verfahren zugänglichen Monoazofarbstoffs aus 1-Hydroxy-2-amino-4-nitrobenzol-6-sulfonsäure und 1,3-Dihydroxybenzol und 41,9 Teile des in üblicher Weise erhaltenen 1:1-Chromkomplexes des Monoazofarbstoffs aus 1-Hydroxy-2-amino-4-nitrobenzol-6-sulfonsäure und 1-Phenyl-3-methyl-5-pyrazolon werden in 500 Teilen Wasser suspendiert. Die Reaktionsmischung wird unter Rühren auf 90 bis 95° erhitzt und durch Zutropfen von 2N-Natriumcarbonatlösung auf einem pH-Wert von 7,0 bis 7,5 gehalten. Es entsteht rasch eine klare, orangerote Lösung des einheitlichen asymmetrischen Chromkomplexes.

Nach Kühlen auf 0 bis 5° wird die Reaktionslösung nach und nach mit der in üblicher Weise aus 24,5 Teilen 1-Aminonaphthalin-6-sulfonsäure hergestellten Diazoniumverbindung versetzt, wobei durch Zugabe von wasserfreiem Natriumcarbonat ein pH-Wert von 8,5 bis 9,5 eingehalten wird. Der hierbei entstehende, rotbraune Komplexfarbstoff der Konstitution

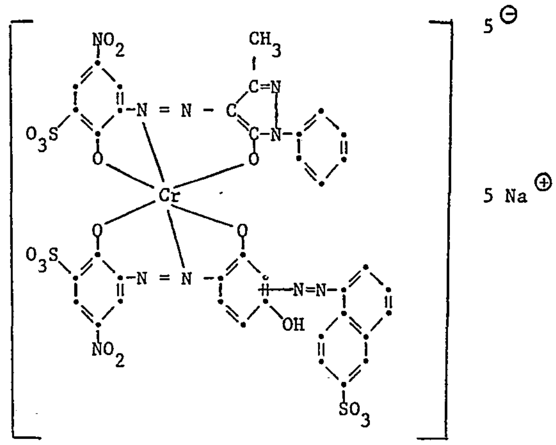

wird durch Zugabe von Natriumchlorid ausgefällt, durch Filtration isoliert und mit Natriumchloridlösung gewaschen. Nach dem Trocknen im Vakuum bei 80° und Mahlen liegt der neue Farbstoff als leicht wasserlösliches Pulver vor, mit welchem auf Chromleder und auf nachgegerbtem Leder volle Rotbraunfärbungen mit guten Echtheitseigenschaften zu erzielen sind.

In der nachfolgenden Tabelle sind weitere Komplexfarbstoffe angeführt, die nach den Angaben der Beispiele 1 bis 5 aus den Farbstoffen der Kolonnen I und II erhältlich sind, wobei jeweils einer der Farbstoffe aus beiden Kolonnen als 1:1-Chromkomplex eingesetzt wird. Kolonne III gibt die auf Leder erzielbaren Farbtöne an.

| | I | II | III Nuance |
|---|---|---|---|
| 1. | 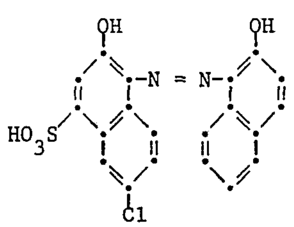 | 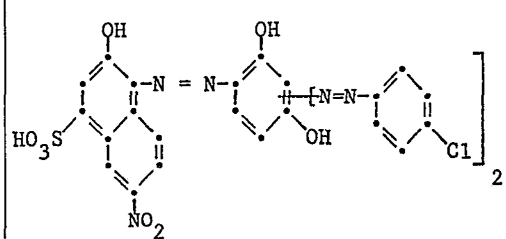 | schwarz |
| 2. | 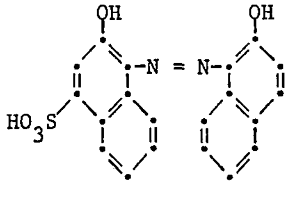 | 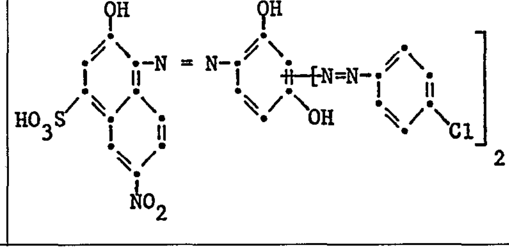 | schwarz |

| | I | II | III Nuance |
|---|---|---|---|
| 3. | 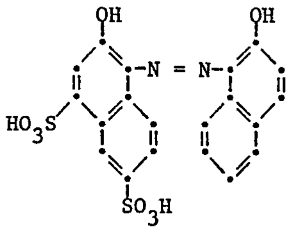 | 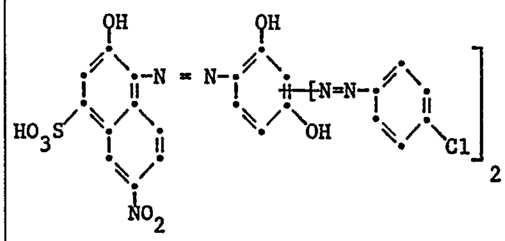 | schwarz |
| 4. | 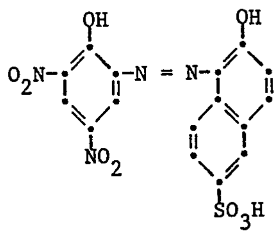 | 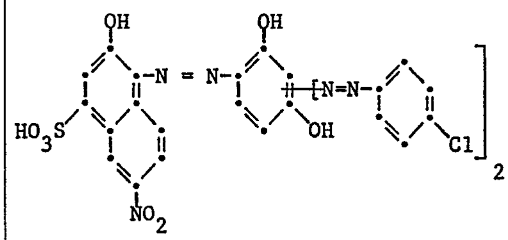 | grünstichig schwarz |
| 5. | 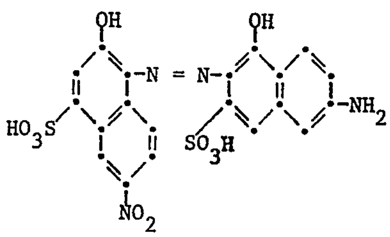 | 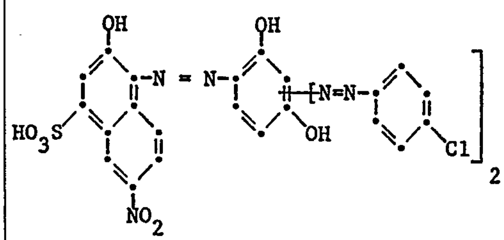 | schwarz |
| 6. | 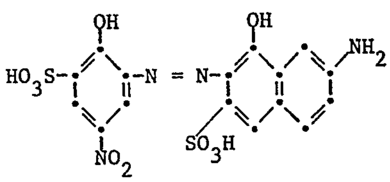 | 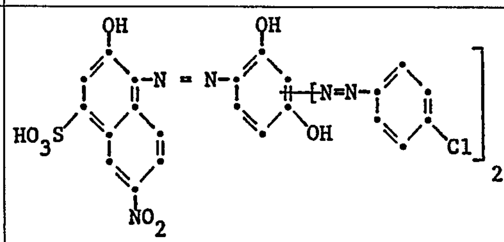 | braunstichig schwarz |
| 7. | 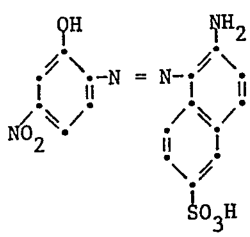 | 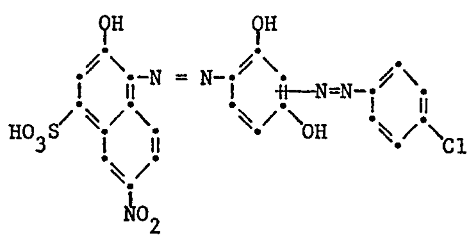 | grünstichig schwarz |
| 8. | 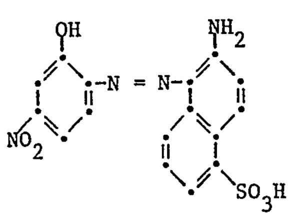 | 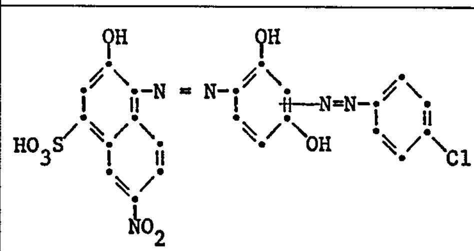 | grünstichig schwarz |

| | I | II | III Nuance |
|---|---|---|---|
| 9. | 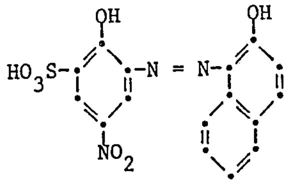 | 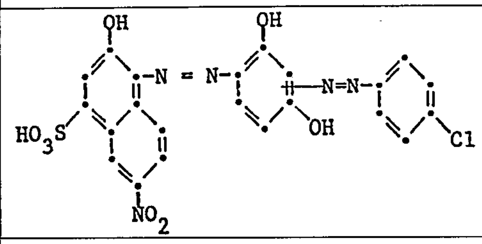 | braunstichig schwarz |
| 10. | 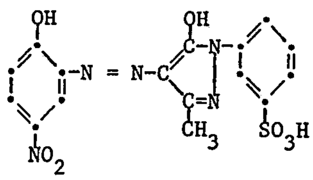 | 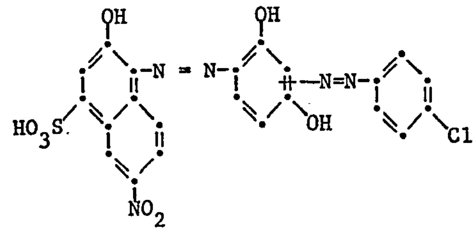 | dunkelbraun |
| 11. | 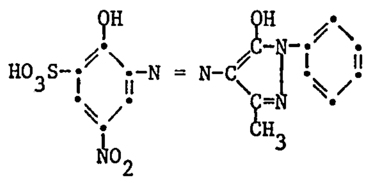 | 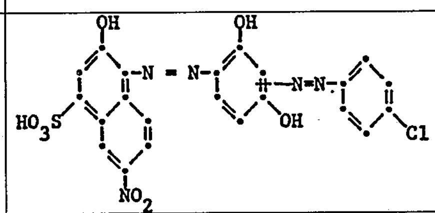 | dunkelbraun |
| 12. | 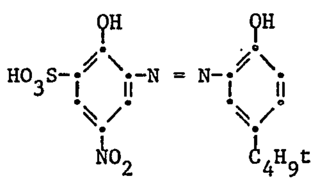 | 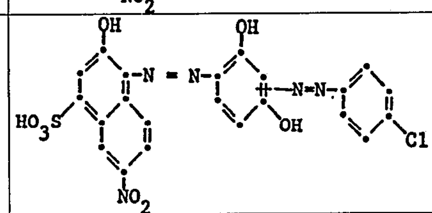 | dunkelbraun |
| 13. | 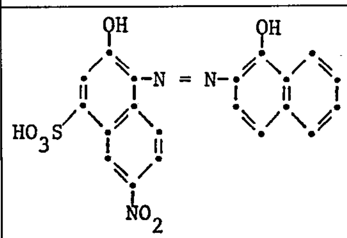 | 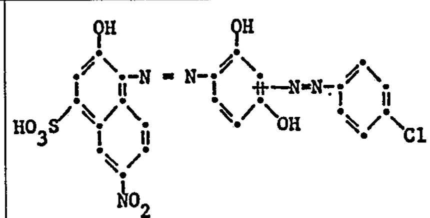 | schwarz |
| 14. | 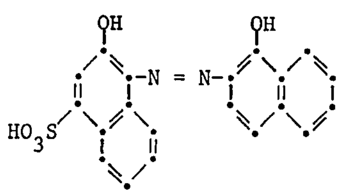 | 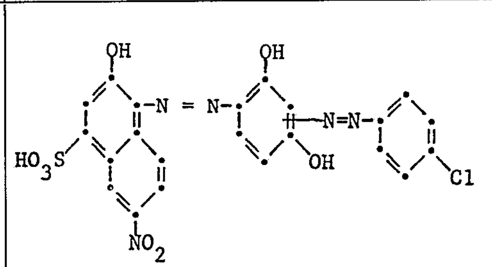 | schwarz |
| 15. | 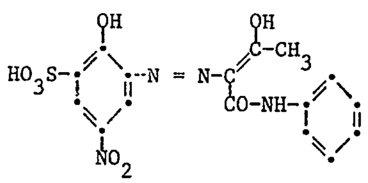 | 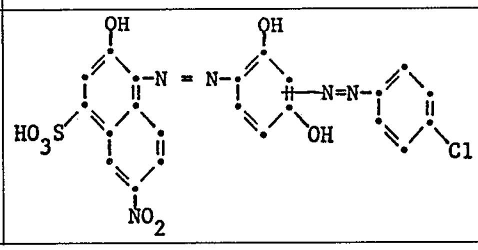 | braun |

| | I | II | III Nuance |
|---|---|---|---|
| 16. | 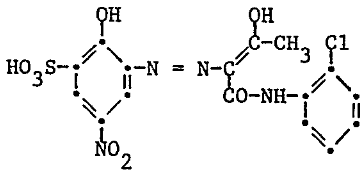 | 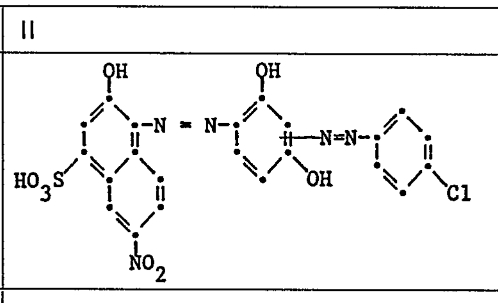 | braun |
| 17. | 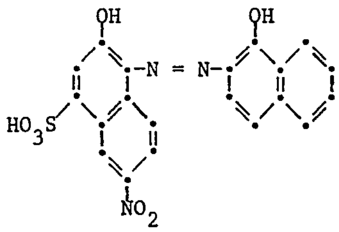 | 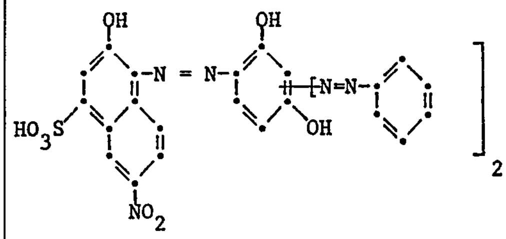 | schwarz |
| 18. | 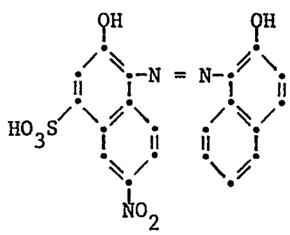 | 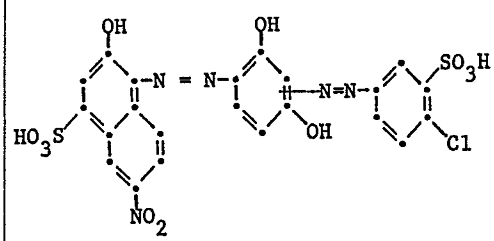 | schwarz |
| 19. | 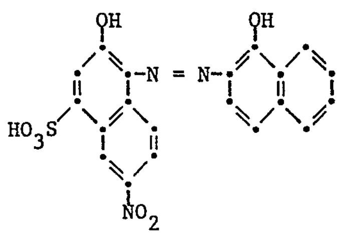 | 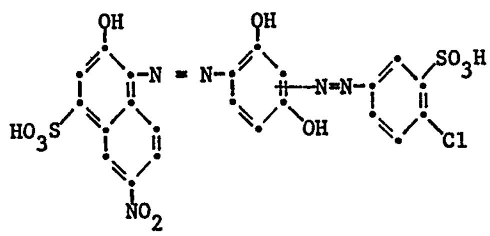 | schwarz |
| 20. | 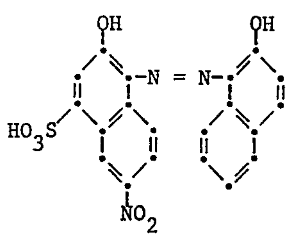 | 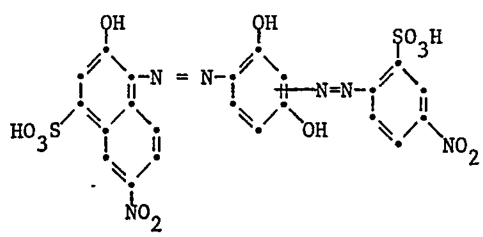 | schwarz |
| 21. | 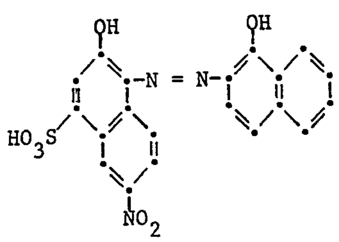 | 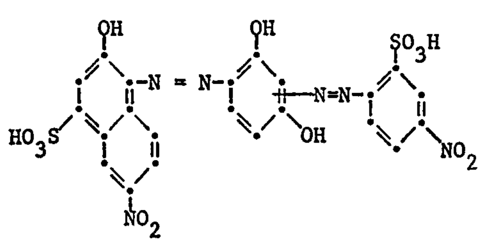 | schwarz |

| | I | II | III Nuance |
|---|---|---|---|
| 22. | 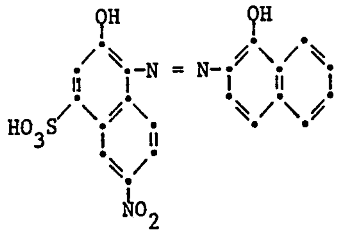 | 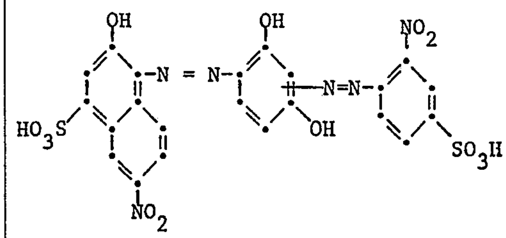 | braunstichig schwarz |
| 23. | 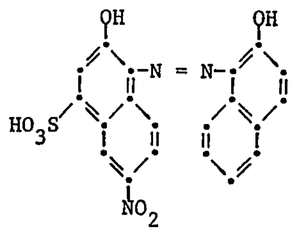 | 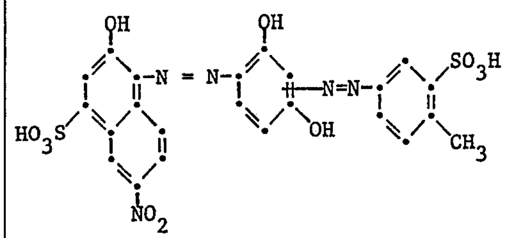 | schwarz |
| 24. | 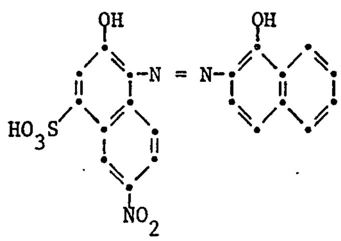 | 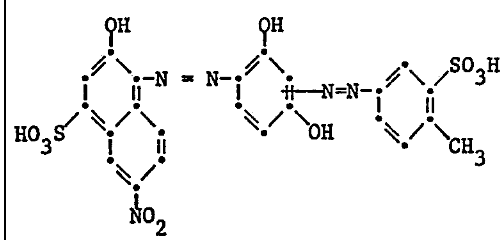 | schwarz |
| 25. | 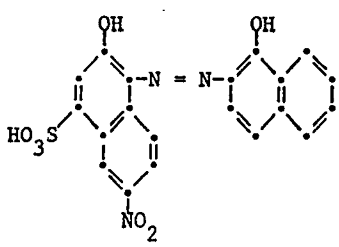 | 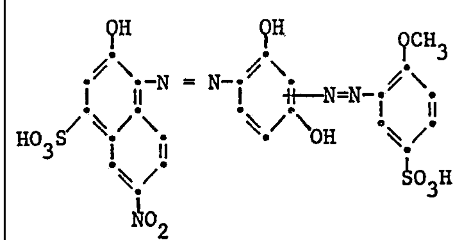 | violettstichig schwarz |
| 26. | 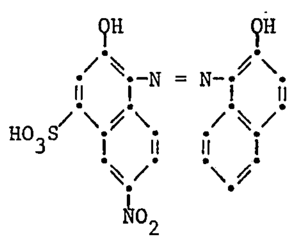 | 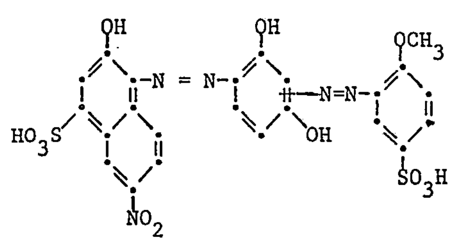 | violettstichig schwarz |
| 27. | 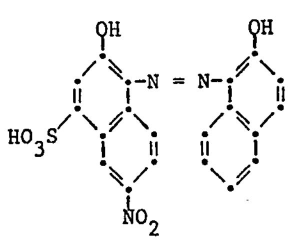 | 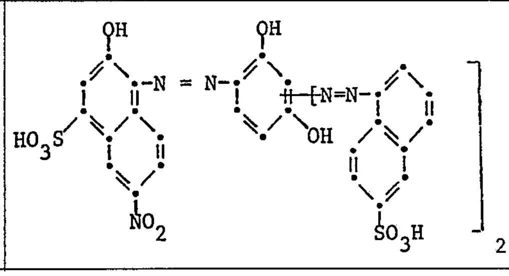 | schwarz |

| | I | II | III Nuance |
|---|---|---|---|
| 28. | 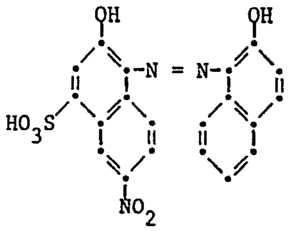 | 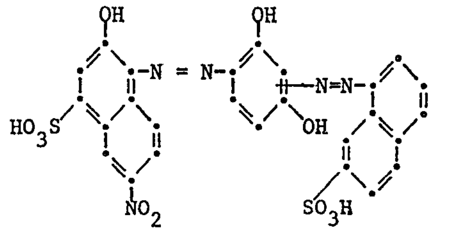 | schwarz |
| 29. | 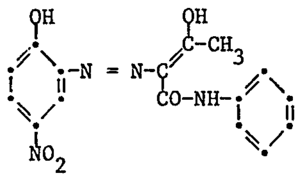 | 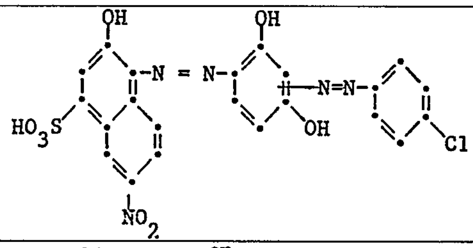 | dunkelbraun |
| 30. | 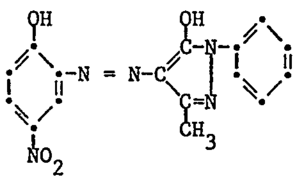 | 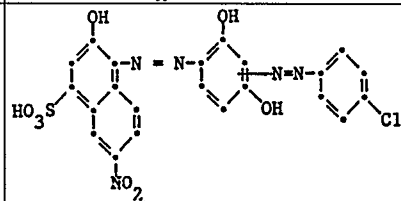 | dunkelbraun |
| 31. | 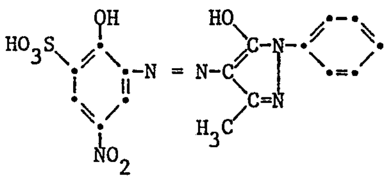 | 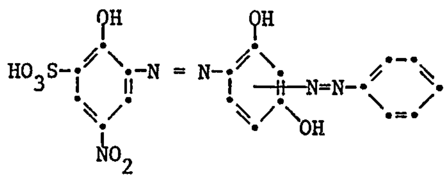 | rotbraun |
| 32. | 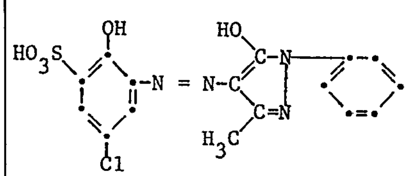 | 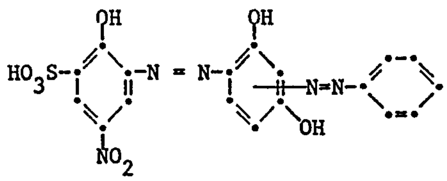 | violettbraun |
| 33. | 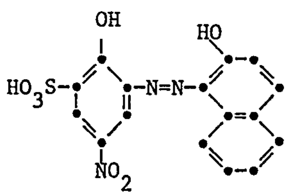 | 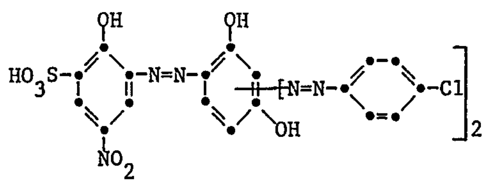 | braun |
| 34. | 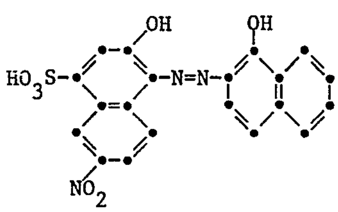 | 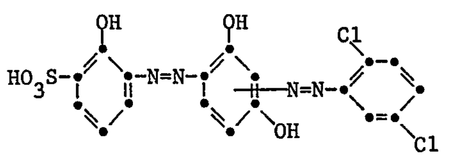 | braunschwarz |

| | I | II | III Nuance |
|---|---|---|---|
| 35. | 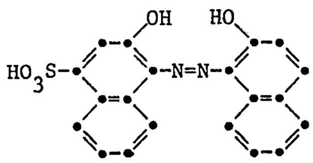 | 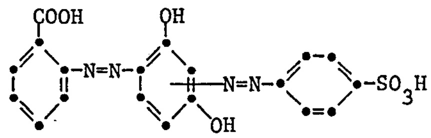 | olivbraun |
| 36. | 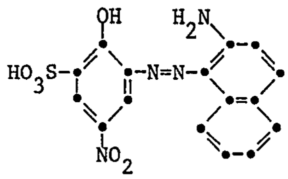 | 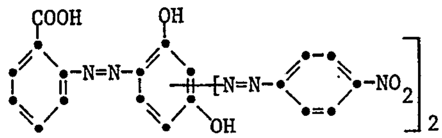 | olive |
| 37. | 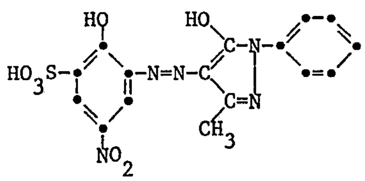 | 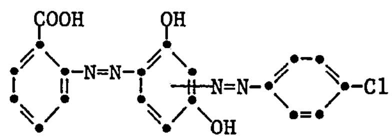 | gelbbraun |
| 38. | 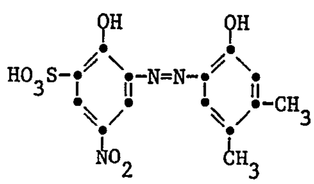 | 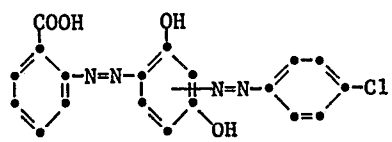 | gelbbraun |
| 39. | 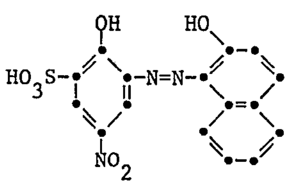 | 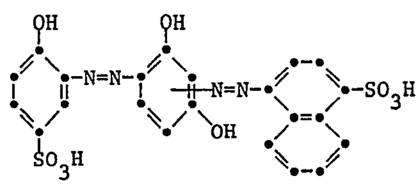 | braun |
| 40. | 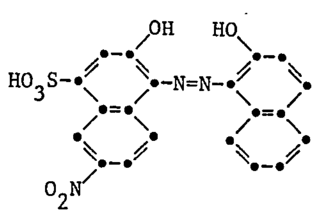 | 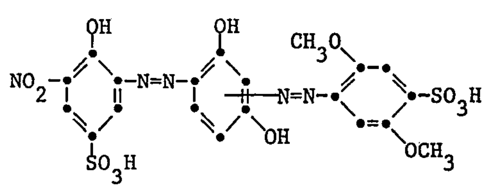 | braunviolet |

| | I | II | III Nuance |
|---|---|---|---|
| 41. | 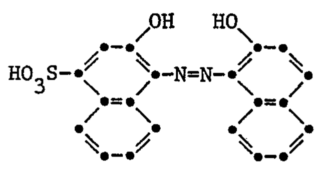 | 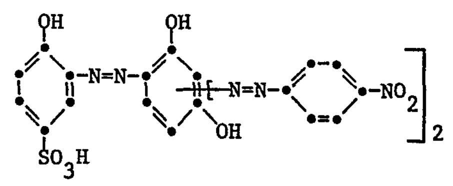 | olivbraun |
| 42. | 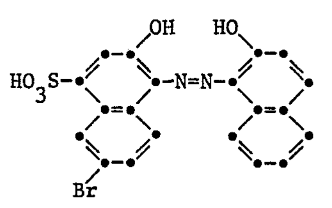 | 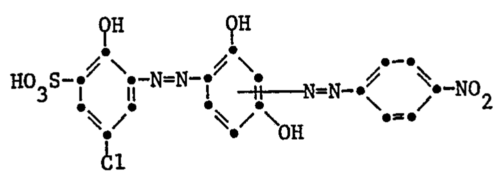 | braunschwarz |

*Beispiel 6:*

43,9 Teile des Monoazofarbstoffs aus 1-Diazo-2-hydroxy-6-nitronaphthalin-4-sulfonsäure und 2-Hydroxynaphthalin in Form des 1:1-Chromkomplexes und 40,5 Teile des in Beispiel 1 erwähnten Monoazofarbstoffes aus 1-Diazo-2-hydroxy-6-nitronaphthalin-4-sulfonsäure und 1,3-Dihydroxybenzol werden nach den Angaben des Beispiels 2 zum einheitlich-asymmetrischen Komplex umgesetzt. Die erhaltene, tiefviolette Reaktionslösung wird auf 3 bis 8° gekühlt und mit 12 Teilen wasserfreiem Natriumcarbonat versetzt. Anschliessend wird eine in üblicher Weise aus 16,4 Teilen 2-Aminobenzol-1-carbonsäure hergestellte Lösung der Diazoniumverbindung bei 5 bis 10° zugetropft und gleichzeitig durch Zugabe einer 4N-Natriumcarbonatlösung ein pH-Wert von 8 bis 9 eingehalten.

Der in klarer, tiefschwarzer Lösung vorliegende Farbstoff der Konstitution

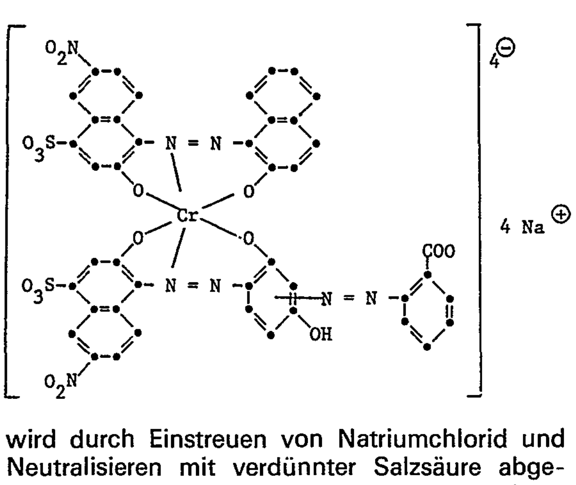

wird durch Einstreuen von Natriumchlorid und Neutralisieren mit verdünnter Salzsäure abgeschieden, durch Filtration isoliert, mit Natriumchloridlösung gewaschen, im Vakuum bei 80° getrocknet und schliesslich gemahlen. Mit dem leicht wasserlöslichen Farbstoff werden auf Chromleder oder nachgegerbtem Leder volle, leicht blaustichige Schwarzfärbungen mit guten Echtheitseigenschaften erhalten.

*Beispiel 7:*

40,5 Teile des nach bekannten Verfahren erhältlichen Monoazofarbstoffs auf 1-Diazo-2-hydroxy-6-nitronaphthalin-4-sulfonsäure und 1,3-Dihydroxybenzol werden nach den Angaben des Beispiels 4 mit der aus 27,5 Teilen 2-Aminobenzol-1-carbonsäure hergestellten Diazoniumverbindung zum analogen Trisazofarbstoff gekuppelt. Wird dieser anschliessend, wie im Beispiel 4 weiter beschrieben, mit dem 1:1-Chromkomplex des Monoazofarbstoffs aus 1-Diazo-2-hydroxy-6-nitronaphthalin-4-sulfonsäure und 2-Hydroxynaphthalin zum einheitlich-asymmetrischen Komplex umgesetzt, so entsteht der Farbstoff von folgender Konstitution

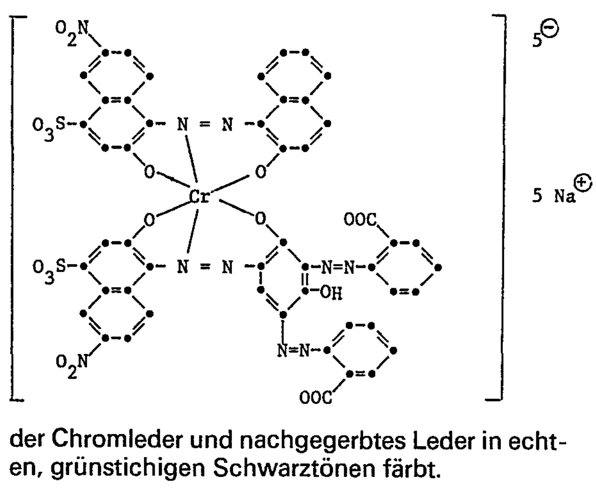

der Chromleder und nachgegerbtes Leder in echten, grünstichigen Schwarztönen färbt.

*Beispiel 8:*

20,25 Teile des Monoazofarbstoffs aus 1-Diazo-2-hydroxy-6-nitronaphthalin-4-sulfonsäure und 1,3-Dihydroxybenzol sowie 21,95 Teile des Monoazofarbstoffs aus 1-Diazo-2-hydroxy-6-nitronaphthalin-4-sulfonsäure und 2-Hydroxynaphthalin werden zusammen in 500 Teilen Wasser von 70° suspendiert und mit 2N-Natriumhydroxidlösung auf pH 8,0 bis 8,2 gestellt. Nach Zugabe von 125 Teilen einer 3,07 Gew.-% $Cr_2O_3$ enthaltenden Lösung von Natriumdisalicylatochromiat(III) wird das Reaktionsgemisch zum Sieden erhitzt und anschliessend so lange unter Rückfluss gerührt, bis beide Ausgangsfarbstoffe nicht mehr nachweisbar sind. Nach Abkühlen der klaren, violettschwarzen Reaktionslösung auf 3 bis 8° wird unter Rühren eine in üblicher Weise erhaltene Lösung des Diazoniumchlorids aus 8 Teilen 4-Chlor-1-aminobenzol zugetropft und gleichzeitig durch Zugeben einer 4N-Natriumcarbonatlösung ein pH-Bereich von 8 bis 9 eingehalten. Nach beendeter Kupplung liegt ein Gemisch vor mit dem asymmetrischen Komplex der Formel

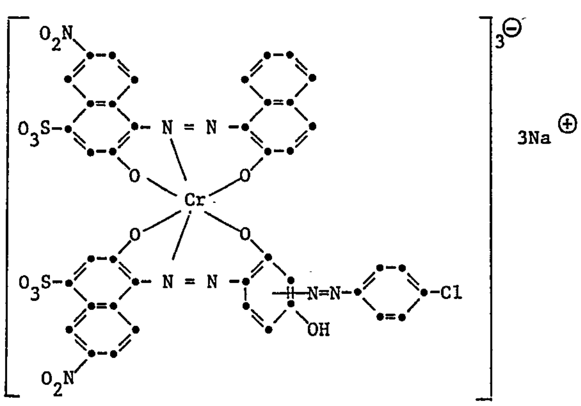

als Hauptprodukt und den beiden entsprechenden symmetrischen 1:2-Komplexen als Nebenprodukten. Der durch Eindampfen der Chromierlösung zur Trockne erhaltene, gut wasserlösliche Farbstoff ergibt auf Leder gut deckende, leicht rotstichige Schwarzfärbungen mit guten Echtheitseigenschaften.

Arbeitet man wie oben angegeben, chromiert jedoch eine Mischung aus 32,4 Teilen des erwähnten Monoazofarbstoffs aus 1,3-Dihydroxybenzol und 8,78 Teilen des angegebenen Monoazofarbstoffs aus 2-Hydroxynaphthalin bei den zuvor angeführten Bedingungen, so resultiert ein koloristisch ähnlicher, jedoch etwas rotstichigerer schwarzer Lederfarbstoff.

*Beispiel 9:*

34,1 Teile des im Beispiel 4 beschriebenen, metallfreien Trisazofarbstoffs und 21,95 Teile des Monoazofarbstoffs aus 1-Diazo-2-hydroxy-6-nitronaphthalin-4-sulfonsäure und 2-Hydroxynaphthalin werden wie im Beispiel 8 gemeinsam zum Gemisch aus den beiden symmetrischen 1:2-Komplexen und dem entsprechenden asymmetrischen Komplex als Hauptprodukt chromiert. Der nach Eindampfen zur Trockne und Mahlen erhaltene Farbstoff ergibt auf Chromleder und auf nachgegerbtem Leder volle, echte Schwarzfärbungen.

*Beispiel 10:*

43,9 Teile des Monoazofarbstoffs aus 1-Diazo-2-hydroxy-6-nitronaphthalin-4-sulfonsäure und 2-Hydroxynaphthalin in Form des 1:1-Chromkomplexes und 40,5 Teile des in Beispiel 1 beschriebenen Monoazofarbstoffs aus 1-Diazo-2-hydroxy-6-nitronaphthalin-4-sulfonsäure und 1,3-Dihydroxybenzol werden gemäss Beispiel 2 zum einheitlich-asymmetrischen Chromkomplex umgesetzt.

Die erhaltene Reaktionslösung wird auf 3 bis 8° gekühlt und mit 12 Teilen wasserfreiem Natriumcarbonat versetzt. Anschliessend wird eine in üblicher Weise aus 5,9 Teilen 4-Methyl-1-aminobenzol und 7,0 Teilen 4-Chlor-1-aminobenzol gemeinsam hergestellte Lösung der beiden Diazoniumverbindungen bei 3 bis 8° zugetropft und gleichzeitig mit einer 4N-Natriumcarbonatlösung ein pH-Bereich von 8,5 bis 9,5 eingehalten. Nach beendeter Kupplung wird die Isolierung des Farbstoffs wie im Beispiel 1 beschrieben durchgeführt. Auf Chromleder und auf nachgegerbtem Leder lassen sich mit dem erhaltenen Komplexfarbstoff volle, echte Schwarznuancen erzielen.

*Beispiel 11:*

40,5 Teile des nach bekanntem Verfahren erhältlichen Monoazofarbstoffes aus 1-Diazo-2-hydroxy-6-nitronaphthalin-4-sulfonsäure und 1,3-Dihydroxybenzol werden nach den Angaben des Beispiels 1 in den 1:1-Chromkomplex übergeführt und dieser anschliessend in alkalischer Lösung bei 3 bis 8° mit der in üblicher Weise hergestellten Diazoniumverbindung aus 23 Teilen 1-Amino-2-nitrobenzol-4-sulfonsäure gekuppelt. Der erhaltene 1:1-Chromkomplex des Disazofarbstoffs wird durch Zugabe von Natriumchlorid abgeschieden, durch Filtration isoliert und mit verdünnter Natriumchloridlösung gewaschen. Die Paste des 1:1-Chromkomplexes wird in 1200 Teilen Wasser von 70° suspendiert. Nach Zugabe von 15,4 Teilen 4-Nitro-2-amino-1-hydroxybenzol und 12,2 Teilen 2-Hydroxybenzaldehyd wird das Reaktionsgemisch auf 80 bis 85° erhitzt, durch Zugabe von 5N-Natriumhydroxidlösung ein pH-Wert von 7 bis 7,5 eingestellt und unter Beibehaltung dieses pH-Bereiches so lange gerührt, bis keine Ausgangsprodukte mehr nachweisbar sind. Es entsteht eine klare, tiefbraune Lösung.

Der neue Komplexfarbstoff von folgender Konstitution

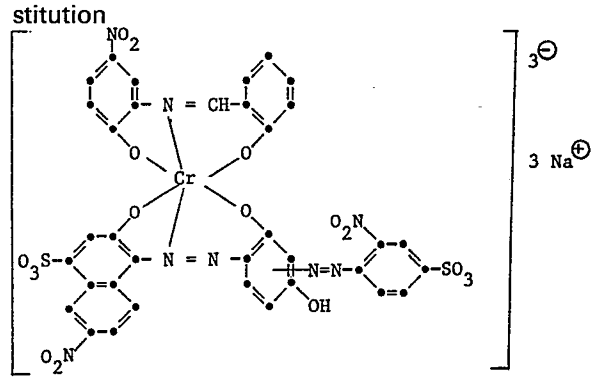

wird durch Eindampfen der Reaktionslösung isoliert; er färbt Chromleder und nachgegerbtes Leder in dunkelbraunen Tönen von allgemein guten Echtheiten.

*Beispiel 12:*

38,8 Teile des nach bekannten Verfahren erhaltenen 1:1-Chromkomplexes des Azomethinfarbstoffs aus 1-Hydroxy-2-amino-4-nitrobenzol-6-sulfonsäure und 2-Hydroxybenzaldehyd werden in 1200 Teilen Wasser von 70° angeschlämmt. Nach Zugabe von 68,2 Teilen des nach Beispiel 4 hergestellten, metallfreien Trisazofarbstoffs wird die Suspension auf 90 bis 95° erhitzt und bei dieser Temperatur unter Einhalten eines pH-Wertes von 7 bis 8 durch Zutropfen einer 2N-Natriumhydroxidlösung gerührt, bis die Ausgangsprodukte nicht mehr nachgewiesen werden können.

Die erhaltene, klare Reaktionslösung enthält den einheitlich-asymmetrischen Chromkomplex von folgender Konstitution

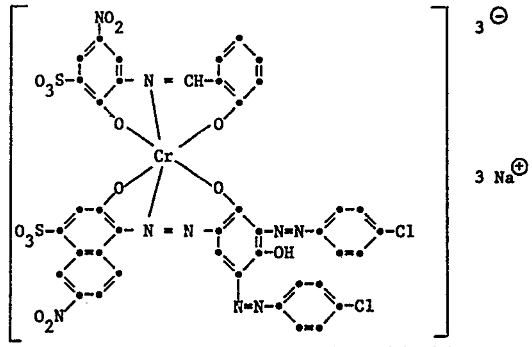

Der durch Zugabe von Natriumchlorid ausgefällte, durch Filtration isolierte und getrocknete Farbstoff ergibt auf Leder verschiedener Herkunft gleichmässige, echte Olivbrauntöne.

Farbstoffe mit ähnlichen Eigenschaften erhält man, wenn man die in Spalte 2 genannten Azomethinfarbstoffe mit den in Spalte 3 aufgeführten Azofarbstoffen nach den Angaben des Beispiels 11 bzw. 12 zu einheitlich-asymmetrischen Chromkomplexen umsetzt. Die Farbstoffe färben Leder in den in Spalte 4 verzeichneten Nuancen mit guten Echtheiten.

| | Azomethinfarbstoff | als 1:1-Chromkomplex eingesetzter Azofarbstoff | Nuance |
|---|---|---|---|
| 1. | 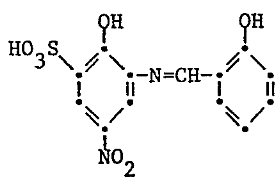 | 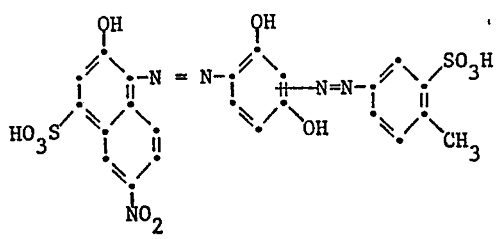 | olivebraun |
| 2. | 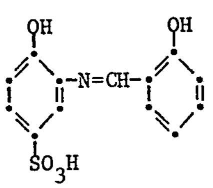 | 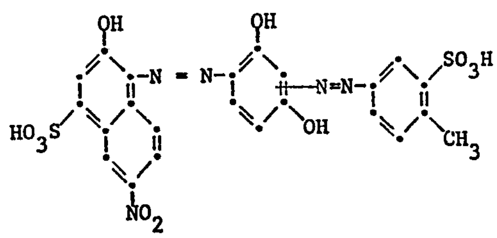 | olivebraun |
| 3. | 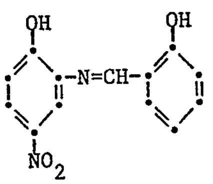 | 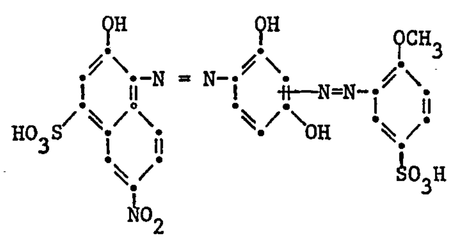 | olivebraun |
| 4. | 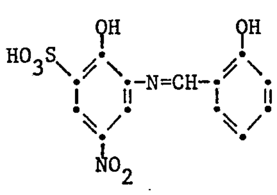 | 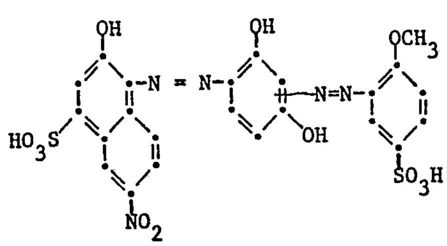 | olivebraun |

| | Azomethinfarbstoff | als 1:1-Chromkomplex eingesetzter Azofarbstoff | Nuance |
|---|---|---|---|
| 5. | 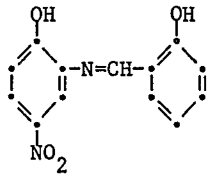 | 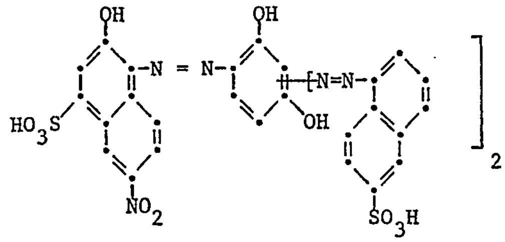 | olivebraun |
| 6. | 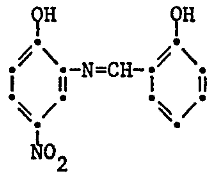 | 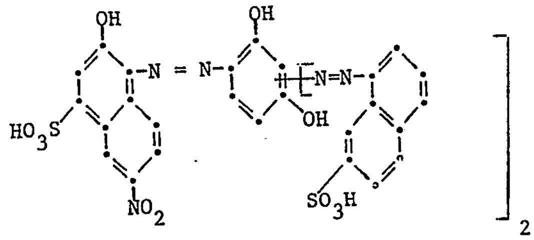 | olivebraun |
| 7. | 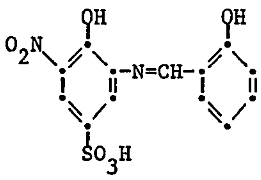 | 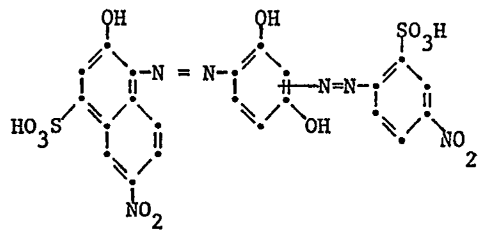 | dunkelbraun |
| 8. | 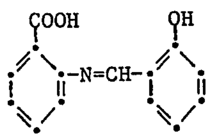 | 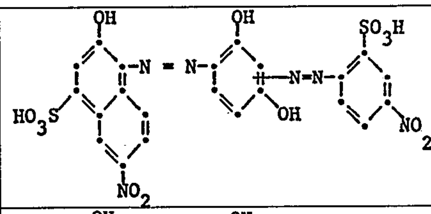 | braun |
| 9. | 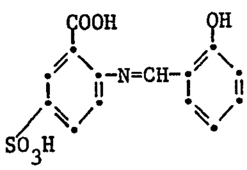 | 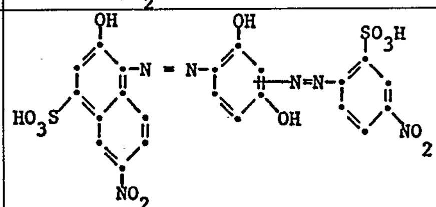 | braun |
| 10. | 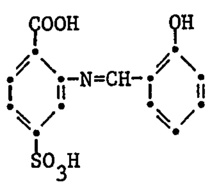 | 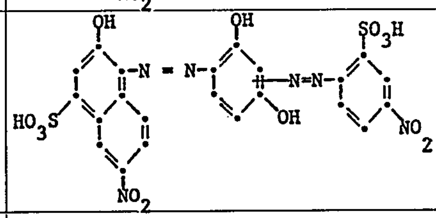 | braun |
| 11. | 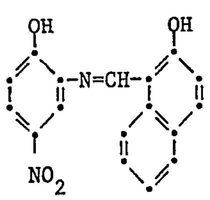 | 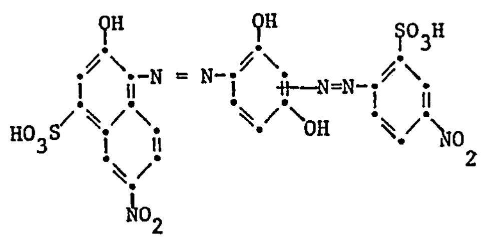 | dunkelbraun |

| | Azomethinfarbstoff | als 1:1-Chromkomplex eingesetzter Azofarbstoff | Nuance |
|---|---|---|---|
| 12. | 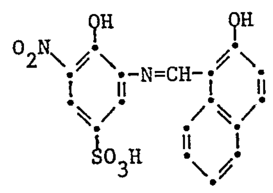 | 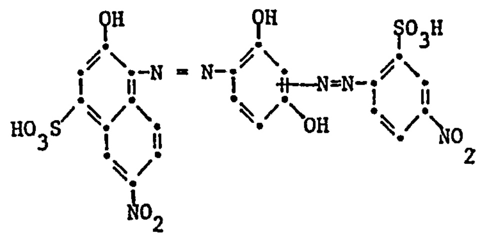 | dunkelbraun |
| 13. | 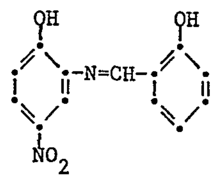 | 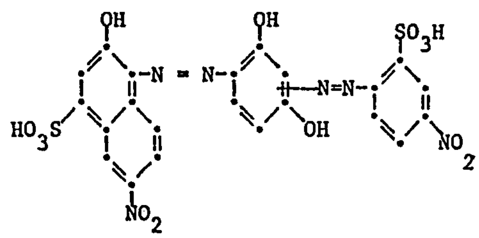 | dunkelbraun |
| 14. | 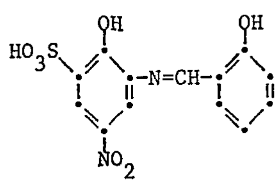 | 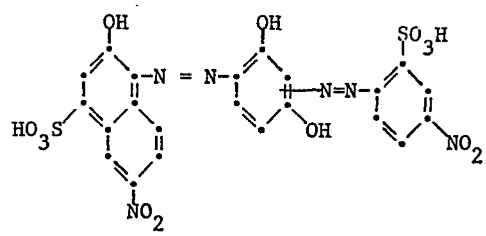 | dunkelbraun |
| 15. | 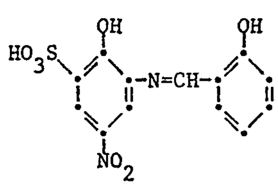 | 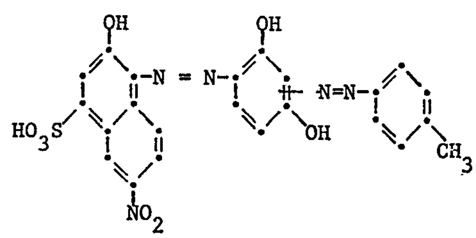 | olivebraun |
| 16. | 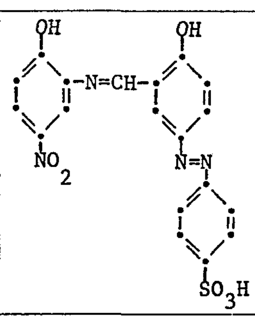 | 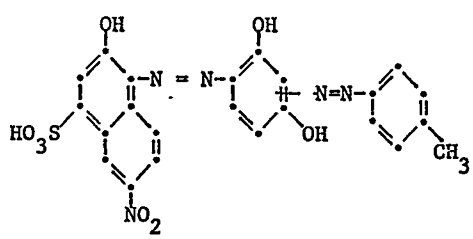 | olivebraun |

| | Azomethinfarbstoff | als 1:1-Chromkomplex eingesetzter Azofarbstoff | Nuance |
|---|---|---|---|
| 17. | 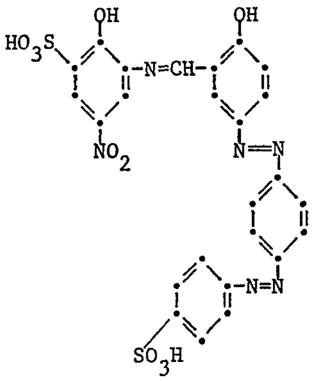 | 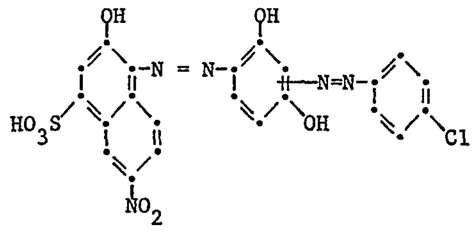 | dunkelbraun |
| 18. | 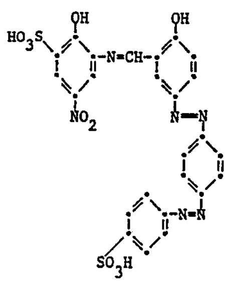 | 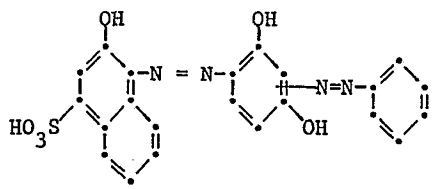 | dunkelbraun |
| 19. | 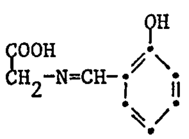 | 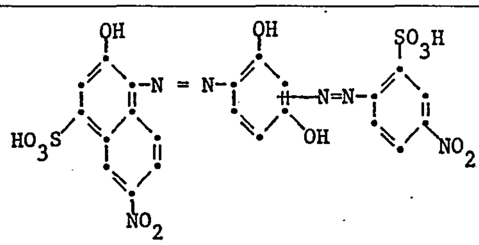 | olivebraun |
| 20. | 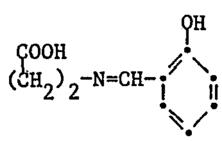 | 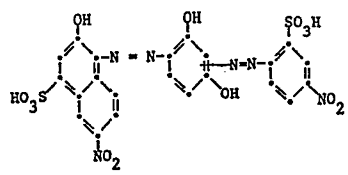 | olivebraun |
| 21. | 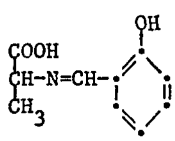 | 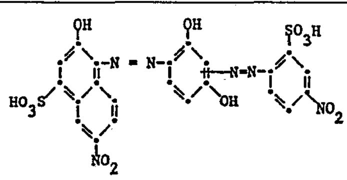 | olivebraun |
| 22. | 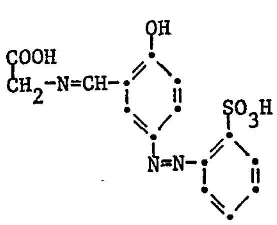 | 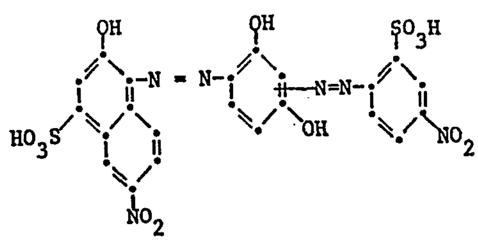 | olivebraun |

| | Azomethinfarbstoff | als 1:1-Chromkomplex eingesetzter Azofarbstoff | Nuance |
|---|---|---|---|
| 23. | 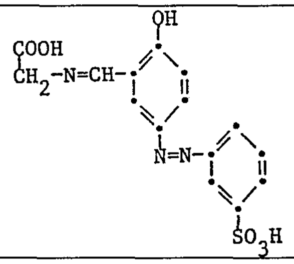 | 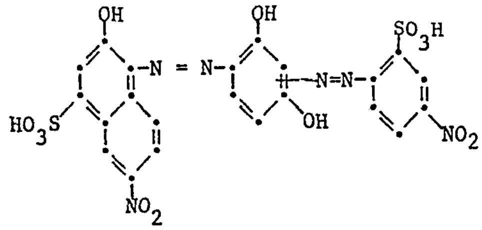 | dunkelbraun |
| 24. | 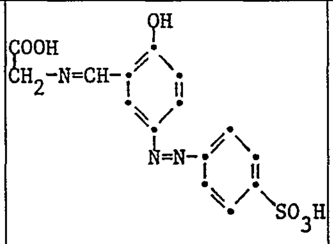 | 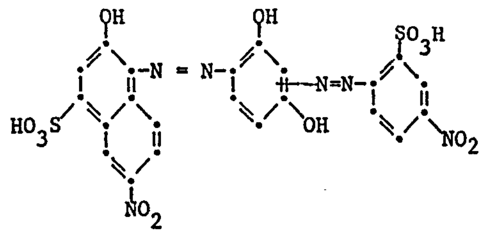 | dunkelbraun |
| 25. | 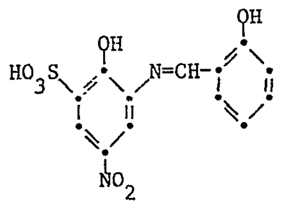 | 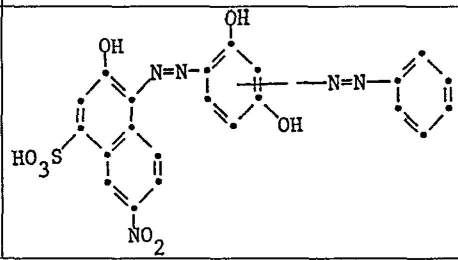 | braun |
| 26. | 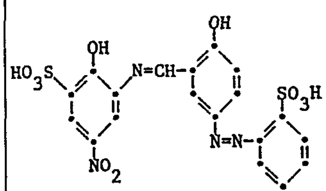 | 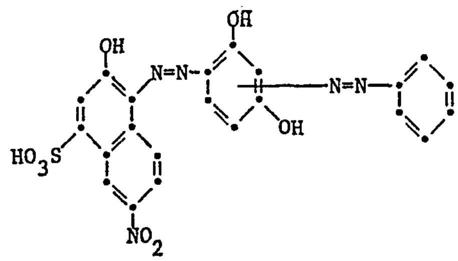 | olivebraun |
| 27. | 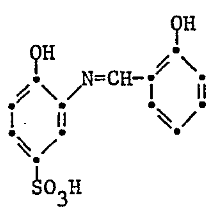 | 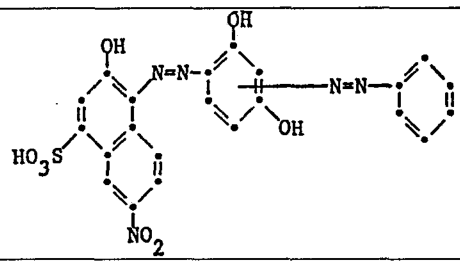 | braun |
| 28. | 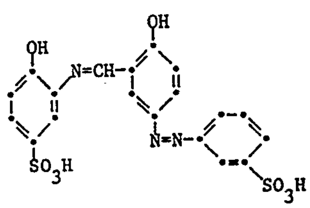 | 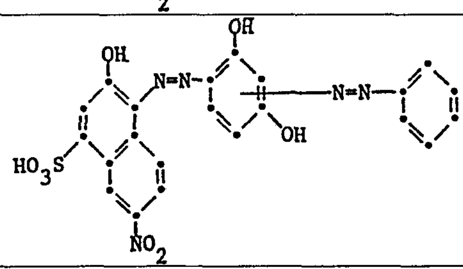 | olivebraun |
| 29. | 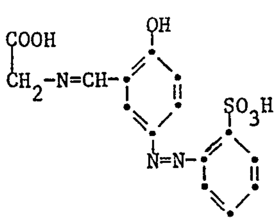 | 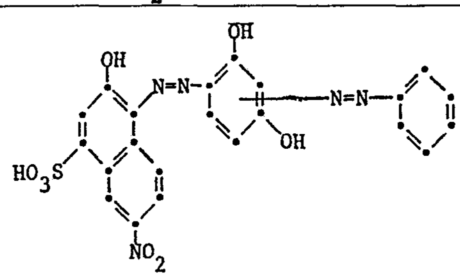 | olivebraun |

| | Azomethinfarbstoff | als 1:1-Chromkomplex eingesetzter Azofarbstoff | Nuance |
|---|---|---|---|
| 30. | 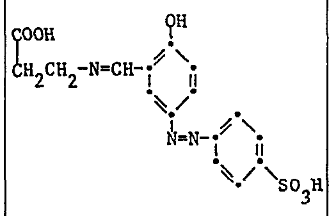 | 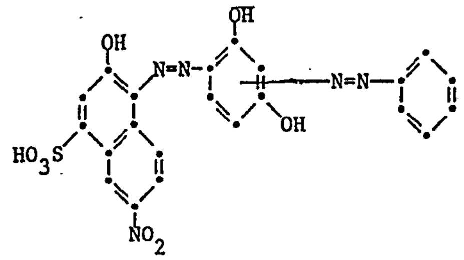 | olivebraun |
| 31. | 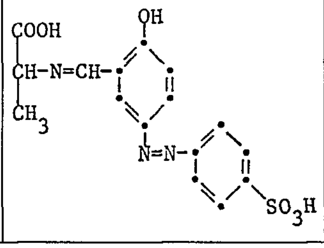 | 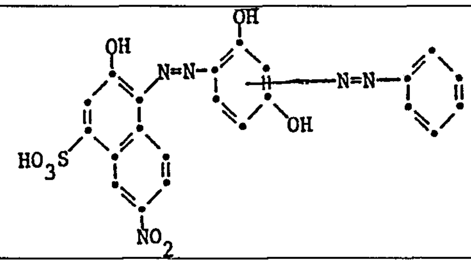 | olivebraun |

*Färbevorschrift für Leder*

100 Teile Bekleidungveloursleder (Trockengewicht) werden bei 50° in einer Lösung von 1000 Vol.-Teilen Wasser und 2 Teilen Ammoniak 24%ig während 2 h aufgewalkt und anschliessend bei 60° in einer Lösung Farbstoff aus Beispiel 8 während 1 h gefärbt. Hierauf gibt man eine Lösung von 40 Vol.-Teilen Wasser und 4 Teilen Ameisensäure 85%ig zu und färbt noch weitere 30 min. Dann werden die Leder gut gespült und gegebenenfalls noch mit 2 Teilen eines Dicyandiamidformaldehydkondensationsproduktes während 30 min bei 50° behandelt.

In gleicher Weise lassen sich andere Veloursleder sowie Handschuhleder färben.

Die so erhaltenen schwarzen Färbungen zeichnen sich durch allgemein gute Echtheiten und sehr gutes Deckvermögen aus.

## Patentansprüche

1. Chromkomplexfarbstoffe der Formel (I)

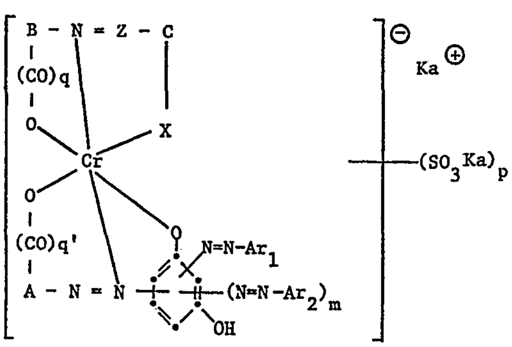 (I)

worin

Z Stickstoff oder eine −CH-Gruppe,

A den Rest einer Diazokomponente der Benzol- oder Naphthalinreihe, welcher die Hydroxy- oder Carboxygruppe in o-Stellung zur Azogruppe trägt,

B einen Rest der Benzol- oder Naphthalinreihe, welcher in o-Stellung zur Azo- oder Azomethingruppe eine Hydroxy- oder Carboxygruppe trägt, oder, falls q = 1 ist und Z eine −CH-Gruppe darstellt, den Rest einer aliphatischen, cycloaliphatischen oder aromatischen Aminocarbonsäure,

C den Rest einer Kupplungskomponente, wenn Z Stickstoff ist, wobei die Kupplungskomponente in o- bzw. α-Stellung zur Azogruppe die Gruppe X enthält und ausser der Gruppe X keine Hydroxygruppe oder unsubstituierte Aminogruppe aufweist, falls C eine Kupplungskomponente der Benzolreihe ist, oder den Rest eines o-Hydroxyaldehyds, wenn Z die −CH-Gruppe darstellt,

X Sauerstoff oder, wenn Z Stickstoff ist, auch eine Gruppe der Formel −NR−, worin R Wasserstoff oder eine $C_1$-$C_4$-Alkylgruppe bedeutet,

$Ar_1$ und $Ar_2$ unabhängig voneinander je ein gegebenenfalls substituierter Benzol- oder Naphthalinrest oder ein heterocyclischer Rest ist,

m 0 bis 1,

q und q' unabhängig voneinander 0 oder 1,

p eine ganze Zahl von 0 bis 6, und

$Ka^{\oplus}$ ein Kation bedeuten.

2. Farbstoffe gemäss Anspruch 1, worin A und B unabhängig voneinander je den Rest eines 1-Hydroxy-2-aminobenzols oder 1-Amino-2-hydroxynaphthalins bedeuten, welcher gegebenenfalls durch Halogen, Nitro und/oder Sulfo substituiert ist.

3. Farbstoffe gemäss Anspruch 2, worin A und B unabhängig voneinander je den Rest eines 1-Amino-2-hydroxy-4-sulfonaphthalins darstellen, welcher gegebenenfalls in 6-Stellung durch Halogen, Nitro oder Sulfo substituiert ist.

4. Farbstoffe gemäss den Ansprüchen 1 bis 3, worin Z Stickstoff und C ein gegebenenfalls durch Amino und/oder Sulfo substituiertes 1- oder 2-Naphthol, 1- oder 2-Naphthylamin, gegebenenfalls substituiert durch Sulfo, p-Alkyl-($C_1$-$C_6$)-phenol, 1-Phenyl-3-methyl-5-pyrazolon oder Acetessigsäureanilid darstellt, wobei die Phenylgruppe in den beiden letztgenannten Verbindungen durch $C_1$-$C_4$-Alkyl, $C_1$-$C_4$-Alkoxy, Chlor oder Sulfo substituiert sein kann.

5. Farbstoffe gemäss den Anspruchen 1 bis 3, worin Z eine −CH-Gruppe und C den Rest eines o-Hydroxybenzaldehyds oder o-Hydroxynaphthaldehyds darstellt, welcher durch niedrigmolekulares Alkyl, Halogen, Sulfo, Phenylazo, Sulfophenylazo, Naphthylazo oder Sulfonaphthylazo substituiert sein kann.

6. Farbstoffe gemäss den Ansprüchen 1 bis 5, worin $Ar_1$ und $Ar_2$ je ein gegebenenfalls mit Chlor, Brom, Nitro, Sulfo, Sulfamoyl, N-mono- oder N,N-dialkyliertem Sulfamoyl, Alkylsulfonyl, Alkyl oder Alkoxy substituierter Phenyl- oder ein gegebenenfalls mit Sulfo substituierter Naphthylrest sind.

7. Farbstoffe gemäss Anspruch 1 der Formel (II)

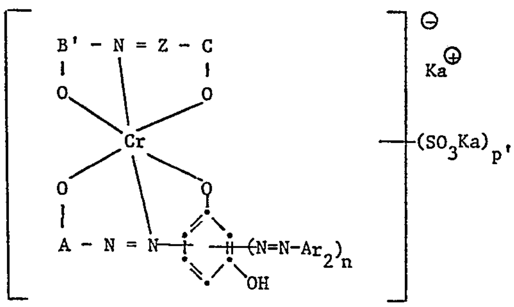

(II)

worin

Z Stickstoff oder eine −CH-Gruppe,

A den Rest einer Diazokomponente der Benzol- oder Naphthalinreihe, welcher die Hydroxygruppe in o-Stellung zur Azogruppe trägt,

B' einen Rest der Benzol- oder Naphthalinreihe, welcher die Hydroxygruppe in o-Stellung zur Azo- oder Azomethingruppe trägt,

C den Rest einer Kupplungskomponente, wenn Z Stickstoff ist, wobei die Kupplungskomponente in o- bzw. α-Stellung zur Azogruppe die Hydroxygruppe trägt und ausser der metallisierten keine weitere Hydroxygruppe und keine unsubstituierte Aminogruppe aufweist, falls C eine Kupplungskomponente der Benzolreihe ist, oder den Rest eines o-Hydroxyaldehyds, wenn Z die −CH-Gruppe darstellt und

$Ar_2$ ein gegebenenfalls substituierter Benzol- oder Naphthalinrest oder ein heterocyclischer Rest,

n eine Zahl zwischen 1 und 2,

p' 2, 3 oder 4, und

$Ka^{\oplus}$ ein Kation ist.

8. Farbstoffe gemäss Anspruch 7, worin A und B' unabhängig voneinander je den Rest eines 1-Hydroxy-2-aminobenzols oder 1-Amino-2-hydroxynaphthalins bedeuten, welcher gegebenenfalls durch Halogen, Nitro und/oder Sulfo substituiert ist, Z Stickstoff und C ein gegebenenfalls durch Amino und/oder Sulfo substituertes 1- oder 2-Naphthol, 1- oder 2-Naphthylamin, gegebenenfalls substituiert durch Sulfo, p-Alkyl-($C_1$-$C_6$)-phenol, 1-Phenyl-3-methyl-5-pyrazolon oder Acetessigsäureanilid darstellt, wobei die Phenylgruppe in den beiden letztgenannten Verbindungen durch $C_1$-$C_4$-Alkyl, $C_1$-$C_4$-Alkoxy, Chlor oder Sulfo substituiert sein kann oder Z eine −CH-Gruppe und C den Rest eines o-Hydroxybenzaldehyds oder o-Hydroxynaphthaldehyds darstellt, welcher durch niedrigmolekulares Alkyl, Halogen, Sulfo, Phenylazo, Sulfophenylazo, Naphthylazo oder Sulfonaphthylazo substituiert sein kann, $Ar_2$ ein gegebenenfalls mit Chlor, Brom, Nitro, Sulfo, Sulfamoyl, N-mono- oder N,N-dialkyliertem Sulfamoyl, Alkylsulfonyl, Alkyl oder Alkoxy substituierter Phenyl- oder ein gegebenenfalls mit Sulfo substituierter Naphthylrest ist, p' 2, 3 oder 4 und $Ka^{\oplus}$ ein Kation bedeuten.

9. Farbstoffe gemäss Anspruch 8, worin A und B' unabhängig voneinander je den Rest eines 1-Amino-2-hydroxy-4-sulfonaphthalins darstellen, welcher gegebenenfalls in 6-Stellung durch Halogen, Nitro oder Sulfo substituiert ist und die übrigen Symbole die im Anspruch 8 angegebene Bedeutung aufweisen.

10. Farbstoffe gemäss Anspruch 1 der Formel (III)

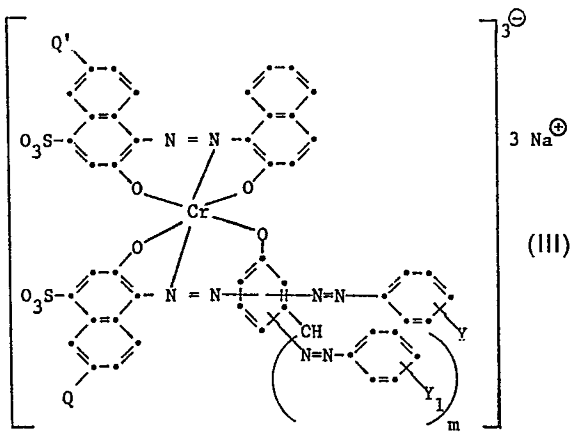

(III)

worin Y und $Y_1$ unabhängig voneinander je Wasserstoff, Chlor, Methyl, Ethyl, Methoxy, Ethoxy, Sulfo oder Nitro und Q und Q' unabhängig voneinander je Wasserstoff oder Nitro und m 0 bis 1 bedeuten.

11. Farbstoffe gemäss Anspruch 10, worin Q und Q' Nitro und Y und $Y_1$ Chlor bedeuten.

12. Verfahren zur Herstellung von Chromkomplexfarbstoffen der Formel (I), dadurch gekennzeichnet, dass man einen 1:1-Chromkomplex eines Farbstoffes der Formel (IV)

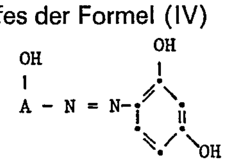

(IV)

oder eines Farbstoffes der Formel (V)

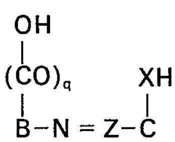

(V)

herstellt, diesen dann mit einem nicht metallisierten Farbstoff der Formel (V) bzw. (IV) zum asymmetrischen 1:2-Chromkomplex umsetzt, wobei man entweder vorgängig den Farbstoff der Formel

(IV) oder den 1:1-Komplex dieses Farbstoffes oder anschliessend den gebildeten 1:2-Komplex mit einem bis ca. 2 mol einer Diazoniumverbindung der Formel (VI)

$$Y^{\ominus}\, N\equiv\overset{\oplus}{N}-Ar_2 \text{ und/oder } Y^{\ominus}\, N\equiv\overset{\oplus}{N}-Ar_1 \quad \text{(VI)}$$

kuppelt, wobei A, B, C, Z, X, $Ar_1$, $Ar_2$, m, n, q, p und $Ka^{\oplus}$ die unter der Formel (I) angegebene Bedeutung aufweisen und $Y^{\ominus}$ ein Anion bedeutet.

13. Verfahren gemäss Anspruch 12, dadurch gekennzeichnet, dass man einen Farbstoff der Formel (IV) mit dem 1:1-Chromkomplex eines Farbstoffes der Formel (V) zum 1:2-Chromkomplex umsetzt, und anschliessend mit einer Diazoniumverbindung der Formel (VI) kuppelt.

14. Verfahren gemäss Anspruch 12, dadurch gekennzeichnet, dass man ein Gemisch aus einem Azofarbstoff der Formel (IV) und einem Azo- oder Azomethinfarbstoff der Formel (V) mit einem Chromierungsmittel umsetzt und anschliessend mit einer Diazoniumverbindung der Formel (VI) kuppelt, so dass man Mischungen von 1:2-Chromkomplexen erhält.

15. Farbstoffmischungen erhältlich gemäss Anspruch 14, bestehend aus dem unsymmetrischen 1:2-Chromkomplex der Formel (I) sowie symmetrischen 1:2-Komplexen, enthaltend 2 Moleküle Farbstoffe der Formel (IV) bzw. (V).

16. Verfahren zum Färben von Stickstoff- und Hydroxygruppen enthaltenden Materialien, insbesondere von Wolle oder Polyamid und vor allem Leder, unter Verwendung der gemäss den Ansprüchen 1 bis 11 oder 15 definierten bzw. gemäss den Ansprüchen 12 bis 14 erhaltenen Metallkomplexfarbstoffe.

## Claims

1. A chromium complex dye of the Formula (I)

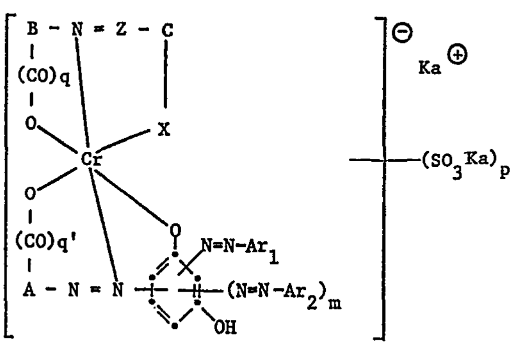

(I)

in which

Z is nitrogen or a −CH group,

A is the radical of a diazo component of the benzene or naphthalene series, which radical carries the hydroxyl or carboxyl group in the o-position relative to the azo group,

B is a radical of the benzene or naphthalene series, which radical carries a hydroxyl or carboxyl group in the o-position relative to the azo or azomethine group or, if q = 1 and Z is a −CH group, B is the radical of an aliphatic, cycloaliphatic or aromatic aminocarboxylic acid,

C, when Z is nitrogen, is the radical of a coupling component which contains the group X in the o- or α-position relative to the azo group and, except for the group X, contains no hydroxyl group, or unsubstituted amino group if C is a coupling component of the benzene series or, when Z is the −CH group, C is the radical of an o-hydroxyaldehyde,

X is oxygen or, when Z is nitrogen, is a group of the formula −NR− in which R is hydrogen or a $C_1$-$C_4$ alkyl group,

$Ar_1$ and $Ar_2$, independently of each other, are a substituted or unsubstituted benzene or naphthalene radical or a heterocyclic radical,

m is 0 to 1,

q and q', independently of each other, are 0 or 1,

p is an integer from 0 to 6, and

$Ka^{\oplus}$ is a cation.

2. A dye according to Claim 1, in which each of A and B, independently of the other, is the radical of a 1-hydroxy-2-aminobenzene or of 1-amino-2-hydroxynaphthalene, which radical is unsubstituted or substituted by halogen, nitro and/or sulfo.

3. A dye according to Claim 2, in which each of A and B, independently of the other, is the radical of a 1-amino-2-hydroxy-4-sulfonaphthalene which is unsubstituted or substituted in the 6-position by halogen, nitro or sulfo.

4. A dye according to one of Claims 1 to 3, in which Z is nitrogen, and C is a 1- or 2-naphthol which is unsubstituted or substituted by amino and/or sulfo, or is 1- or 2-naphthylamine which is unsubstituted or substituted by sulfo, p-($C_1$-$C_6$)-alkylphenol, 1-phenyl-3-methyl-5-pyrazolone or acetoacetanilide, where the phenyl group in the two last mentioned compounds can be substituted by $C_1$-$C_4$ alkyl, $C_1$-$C_4$ alkoxy, chlorine or sulfo.

5. A dye according to one of Claim 1 to 3, in which Z is a −CH group, and C is the radical of an o-hydroxybenzaldehyde or of an o-hydroxynaphthaldehyde, which radical can be substituted by low molecular alkyl, halogen, sulfo, phenylazo, sulfophenylazo, naphthylazo or sulfonaphthylazo.

6. A dye according to one of Claims 1 to 5, in which each of $Ar_1$ and $Ar_2$ is a phenyl radical which is unsubstituted or substituted by chlorine, bromine, nitro, sulfo, sulfamoyl, N-monoalkylated or N,N-dialkylated sulfamoyl, alkylsulfonyl, alkyl or alkoxy, or is a naphthyl radical which is unsubstituted or substituted by sulfo.

7. A dye according to Claim 1 of the Formula (II)

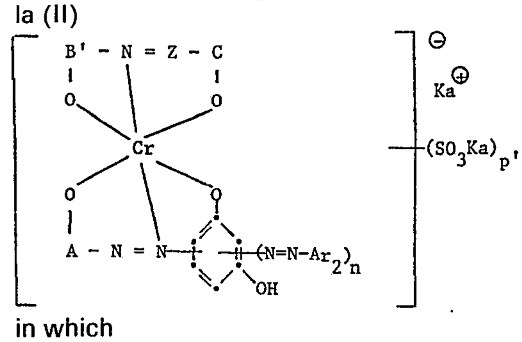

(II)

in which

Z is nitrogen or a −CH group,

A is the radical of a diazo component of the benzene or naphthalene series, which radical carries a hydroxyl group in the o-position relative to the azo group,

B' is a radical of the benzene or naphthalene series, which radical carries a hydroxyl group in the o-position relative to the azo or azomethine group,

C, when Z is nitrogen, is the radical of a coupling component which carries the hydroxyl group in the o- or α-position relative to the azo group and, except for the metallized hydroxyl group, contains no further hydroxyl group and no unsubstituted amino group if C is a coupling component of the benzene series or, when Z is the −CH group, C is the radical of an o-hydroxyaldehyde,

$Ar_2$ is a substituted or unsubstituted benzene or naphthalene radical or a heterocyclic radical,

n is a value from 1 to 2,

p' is 2, 3 or 4, and

$Ka^{\oplus}$ is a cation.

8. A dye according to Claim 7, in which each of A and B', independently of the other, is the radical of a 1-hydroxy-2-aminobenzene or 1-amino-2-hydroxynaphthalene, which radical is unsubstituted or substituted by halogen, nitro and/or sulfo; Z is nitrogen; C is 1- or 2-naphthol which is unsubstituted or substituted by amino and/or sulfo, or is 1- or 2-naphthylamine which is unsubstituted or substituted by sulfo, p-($C_1$-$C_6$)-alkylphenol, 1-phenyl-3-methyl-5-pyrazolone or acetoacetanilide, where the phenol in the two last mentioned compounds can be substituted by $C_1$-$C_4$ alkyl, $C_1$-$C_4$ alkoxy, chlorine or sulfo, or Z is a −CH group and C is the radical of a o-hydroxybenzaldehyde or o-hydroxynaphthaldehyde, which radical can be substituted by low molecular alkyl, halogen, sulfo, phenylazo, sulfophenylazo, naphthylazo or sulfonaphthylazo; $Ar_2$ is a phenyl radical which is unsubstituted or substituted by chlorine, bromine, nitro, sulfo, sulfamoyl, N-monoalkylated or N,N-dialkylated sulfamoyl, alkylsulfonyl, alkyl or alkoxy, or is a naphthyl radical which is unsubstituted or substituted by sulfo; p' is 2, 3 or 4, and $Ka^{\oplus}$ is a cation.

9. A dye according to Claim 8, in which each of A and B', independently of the other, is the radical of a 1-amino-2-hydroxy-4-sulfonaphthalene which is unsubstituted or substituted in the 6-position by halogen, nitro or sulfo, and the remaining symbols are as defined in Claim 8.

10. A dye according to Claim 1 of the Formula (III)

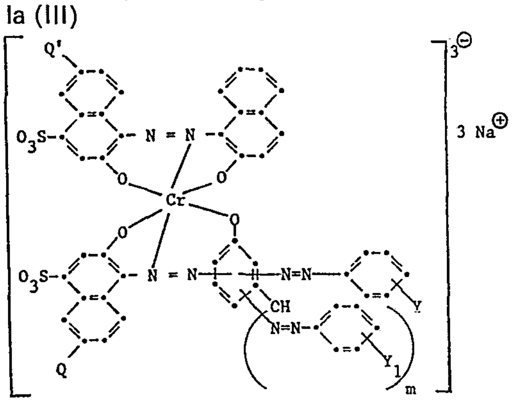

(III)

in which each of Y and $Y_1$, independently of the other, is hydrogen, chlorine, methyl, ethyl, methoxy, ethoxy, sulfo or nitro; each of Q and Q', independently of the other, is hydrogen or nitro, and m is 0 to 1.

11. A dye according to Claim 10, in which Q and Q' are nitro, and Y and $Y_1$ are chlorine.

12. A process for preparing chromium complex dyes of the Formula (I), which comprises preparing a 1:1 chromium complex of a dye of the Formula (IV)

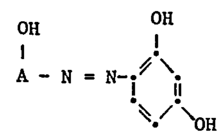

(IV)

or of a dye of the Formula (V)

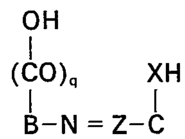

(V)

and then reacting said 1:1 chromium complex with a non-metallized dye of the Formula (V) or (IV) to give the asymmetrical 1:2 chromium complex, where either previously the dye of the Formula (IV) or the 1:1 complex of this dye, or subsequently the 1:2 complex formed, is coupled with 1 to 2 mol of a diazonium compound of the Formula (VI)

$$Y^{\ominus}\ N\equiv\overset{\oplus}{N}-Ar_2 \text{ und/oder } Y^{\ominus}\ N\equiv\overset{\oplus}{N}-Ar_1 \quad \text{(VI)}$$

wherein A, B, C, Z, X, $Ar_1$, $Ar_2$, m, n, q, p and $Ka^{\oplus}$ are as defined for Formula (I) and $Y^{\ominus}$ is an anion.

13. A process according to Claim 12, which comprises reacting a dye of the Formula (IV) with the 1:1 chromium complex of a dye of the Formula (V) to give the 1:2 chromium complex, and then coupling said complex with a diazonium compound of the Formula (VI).

14. A process according to Claim 12, which comprises reacting a mixture of an azo dye of the Formula (IV) and an azo or azomethine dye of the Formula (V) with a chroming agent, and then coupling the metallized product with a diazonium compound of the Formula (VI) to give mixtures of 1:2 chromium complexes.

15. A dye mixture obtainable according to Claim 14, said mixture comprising the asymmetrical 1:2 chromium complex of the Formula (I) and symmetrical 1:2 complexes containing 2 molecules of dye of the Formula (IV) or (V).

16. A process for dyeing material which contains nitrogen and hydroxyl groups, in particular wool or polyamide, and most particularly leather, which process comprises the use of a metal complex dye defined according to one of Claims 1 to 11 or 15, or obtained according to one of Claims 12 to 14.

## Revendications

1. Colorants à complexes de chrome de formule (I)

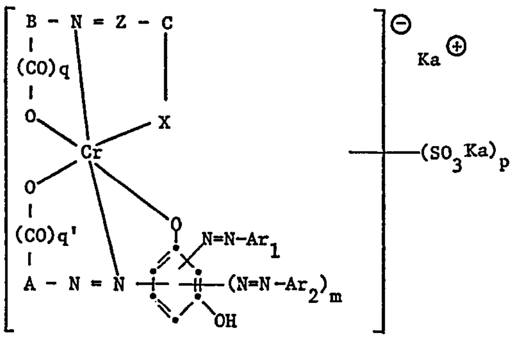

(I)

dans laquelle

Z est l'azote ou un groupe $-CH$,

A est le résidu d'un composant de diazotation de la série du benzène ou du naphtalène, qui porte le groupe hydroxyle ou carboxyle en position ortho par rapport au groupe azoïque,

B est un résidu de la série du benzène ou du naphthalène, qui porte en position ortho par rapport au groupe azoïque ou azométhine un groupe hydroxyle ou carboxyle, ou bien, si q = 1 et Z est un groupe $-CH$, le résidu d'un acide amino-carboxylique aliphatique, cycloaliphatique ou aromatique,

C est le résidu d'un composant de copulation, quand Z est l'azote, auquel cas le composant de copulation contient en position ortho ou α par rapport au groupe azoïque le groupe X et, outre le groupe X, aucun groupe hydroxyle ou groupe amino non substitué, si C est un composant de copulation de la série du benzène, ou bien le résidu d'un o-hydroxyaldéhyde quand Z représente le groupe $-CH$,

X est l'hydrogène ou bien, quand Z et l'azote, est aussi un groupe de formule $-NR-$ où R est l'hydrogène ou un groupe alkyle à 1 à 4 atomes de carbone,

$Ar_1$ et $Ar_2$ sont, indépendamment l'un de l'autre, chacun un radical benzène ou naphtalène éventuellement substitué, ou un radical hétérocyclique,

m vaut 0 à 1,

q et q', indépendamment l'un de l'autre, valent 0 ou 1,

p est un nombre entier de 0 à 6, et

$Ka^{\oplus}$ est un cation.

2. Colorants selon la revendication 1, où A et B, indépendamment l'un de l'autre, sont chacun le résidu d'un 1-hydroxy-2-aminobenzène ou d'un 1-amino-2-hydroxynaphtalène, lequel est éventuellement substitué par un halogène, un groupe nitro et/ou sulfo.

3. Colorants selon la revendication 2, où A et B, indépendamment l'un de l'autre, sont chacun le résidu d'un 1-amino-2-hydroxy-4-sulfonaphtalène, lequel est éventuellement substitué en position 6 par un halogène, un groupe nitro ou sulfo.

4. Colorants selon l'une des revendications 1 à 3, où Z est l'azote et C un 1- ou 2-naphtol éventuellement substitué par un groupe amino et/ou sulfo, 1- ou 2-naphtylamine éventuellement substituée par un groupe sulfo, un groupe p-(alkyl en $C_1$-$C_6$)-phénol, 1-phényl-3-méthyl-5-pyrazolone ou acétylacétanilide, où le groupe phényle des deux composés mentionnés en dernier peut être substitué par un groupe alkyle en $C_1$-$C_4$, alcoxy en $C_1$-$C_4$, chlore ou sulfo.

5. Colorants selon les revendications 1 à 3, où Z est un groupe $-CH$ et C le résidu d'un o-hydroxybenzaldéhyde ou o-hydroxynaphtaldéhyde, lequel peut être substitué par un groupe alkyle à faible masse moléculaire, halogène, sulfo, phénylazo, sulfophénylazo, naphtylazo ou sulfonaphtylazo.

6. Colorants selon les revendications 1 à 5, où $Ar_1$ et $Ar_2$ sont chacun un radical phényle éventuellement substitué par un groupe chloro, bromo, nitro, sulfo, sulfamoyle, sulfamoyl N-mono- ou N,N-dialkylé, alkylsulfonyle, alkyle ou alcoxy, ou bien un radical naphtyle éventuellement substitué par un groupe sulfo.

7. Colorants selon la revendication 1 de formule (II)

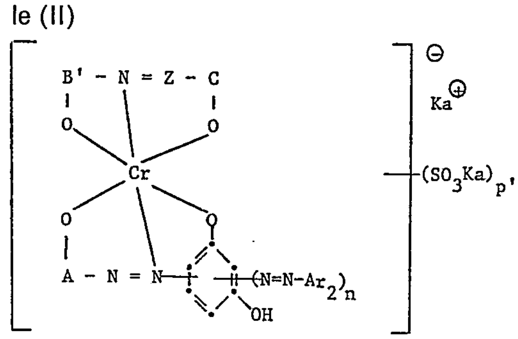

(II)

dans laquelle

Z est l'azote ou un groupe $-CH$,

A est le résidu d'un composant de diazotation de la série du benzène ou du naphtalène, qui porte le groupe hydroxyle en position ortho par rapport au groupe azoïque,

B' est un résidu de la série du benzène ou du naphtalène, qui porte le groupe hydroxyle en position ortho par rapport au groupe azoïque ou azométhine,

C est le résidu d'un composant de copulation quand Z est l'azote, auquel cas le composant de copulation porte le groupe hydroxyle en position ortho ou α par rapport au groupe azoïque et, outre le groupe hydroxyle métallisé, ne contient aucun autre groupe hydroxyle ni aucun groupe amino non substitué quand C est un composant de copulation de la série du benzène, ou bien le résidu d'un o-hydroxyaldéhyde quand Z est le groupe $-CH$,

$Ar_2$ est un radical benzène ou naphtalène éventuellement substitué ou un radical hétérocyclique,

n est un nombre entre 1 et 2,

p' vaut 2, 3 ou 4, et

$Ka^{\oplus}$ est un cation.

8. Colorants selon la revendication 7, où A et B', indépendamment l'un de l'autre, sont chacun le résidu d'un 1-hydroxy-2-aminobenzène ou d'un 1-amino-2-hydroxynaphtalène, lequel est éventuellement substitué par un halogène, un groupe nitro et/ou sulfo; Z est l'azote; C est un 1- ou 2-naphtol éventuellement substitué par un groupe amino et/ou sulfo, 1- ou 2-naphtylamine éventuellement substitué par un groupe sulfo, un

groupe p-(alkyl en $C_1$-$C_6$)-phénol, 1-phényl-3-méthyl-5-pyrazolone ou acétylacétanilide, où le groupe phényle, dans les deux composés mentionnés en dernier, peut être substitué par un groupe alkyle en $C_1$-$C_4$, alcoxy en $C_1$-$C_4$, chloro ou sulfo, ou bien Z est un groupe −CH et C est le résidu d'un o-hydroxybenzaldéhyde ou d'un o-hydroxynaphtaldéhyde, lequel peut être substitué par un groupe alkyle à faible masse moléculaire, halogéno, sulfo, phénylazo, sulfophénylazo, naphtylazo ou sulfonaphtylazo; $Ar_2$ est un radical phényle éventuellement substitué par le chlore, le brome, un groupe nitro, sulfo, sulfamoyle, sulfamoyl N-mono- ou N,N-dialkylé, alkylsulfonyle, alkyle ou alcoxy, ou bien un radical naphtyle éventuellement substitué par un groupe sulfo; p' vaut 2, 3 ou 4, et $Ka^{\oplus}$ est un cation.

9. Colorants selon la revendication 8, où A et B', indépendamment l'un de l'autre, sont chacun le résidu d'un 1-amino-2-hydroxy-4-sulfonaphtalène, lequel est éventuellement substitué en position 6 par un halogène, un groupe nitro ou sulfo, les autres symboles ayant la signification donnée dans la revendication 8.

10. Colorants selon la revendication 1, de formule (III)

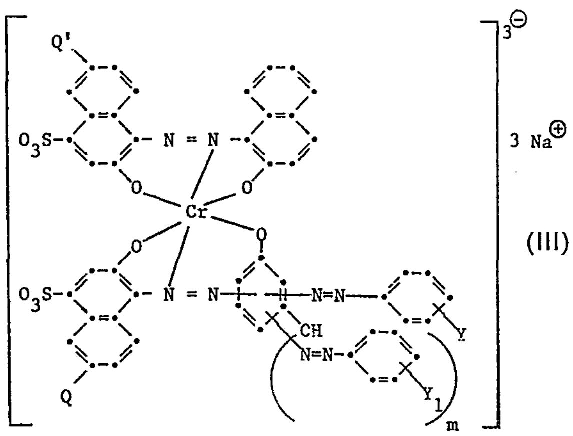

(III)

dans laquelle Y et $Y_1$, indépendamment l'un de l'autre, sont chacun l'hydrogène, le chlore, un groupe méthyle, éthyle, méthoxy, éthoxy, sulfo ou nitro; Q et Q', indépendamment l'un de l'autre, sont chacun l'hydrogène ou un groupe nitro, et m vaut 0 à 1.

11. Colorants selon la revendication 10, où Q et Q' sont des groupes nitro et Y et $Y_1$ sont du chlore.

12. Procédé pour la préparation de colorants à complexes de chrome de formule (I), caractérisé en ce qu'on prépare un complexe de chrome 1:1 d'un colorant de formule (IV)

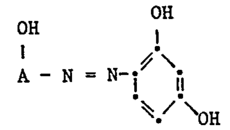

(IV)

ou d'un colorant de formule (V)

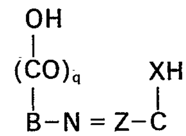

(V)

puis que l'on fait réagir ce dernier avec un colorant non métallisé de formule (V) ou (IV) pour donner le complexe de chrome 1:2 asymétrique, à l'occasion de quoi on copule avec 1 à environ 2 mol d'un composé diazonium de formule (VI)

$$Y^{\ominus}\ N \equiv \overset{\oplus}{N}-Ar_2 \text{ und/oder } Y^{\ominus}\ N \equiv \overset{\oplus}{N}-Ar_1 \quad (VI)$$

ou bien, au préalable, le colorant de formule (IV) ou le complexe 1:1 de ce colorant, ou bien, ensuite, le complexe 1:2 formé, où A, B, C, Z, X, $Ar_1$, $Ar_2$, m, n, q, p et $Ka^{\oplus}$ ont la signification donnée à propos de la formule (I) et $Y^{\ominus}$ est un anion.

13. Procédé selon la revendication 12, caractérisé en ce qu'on fait réagir un colorant de formule (IV) avec le complexe de chrome 1:1 d'un colorant de formule (V) pour obtenir le complexe de chrome 1:2, puis que l'on procède à une copulation avec un composé diazonium de formule (VI).

14. Procédé selon la revendication 12, caractérisé en ce qu'on fait réagir un mélange d'un colorant azoïque de formule (IV) et d'un colorant azoïque ou d'azométhine de formule (V) avec un agent de chromation, puis que l'on procède à une copulation avec un composé diazonium de formule (VI) de façon à obtenir des mélanges de complexes de chrome 1:2.

15. Mélanges de colorants préparables selon la revendication 14, constitués du complexe de chrome 1:2 non symétrique de formule (I) ainsi que de complexes 1:2 symétriques contenant 2 molécules de colorant de formule (IV) ou (V).

16. Procédé pour la teinture de matières contenant des groupes azotés et hydroxyle, en particulier de laine ou de polyamide et surtout de cuir, par l'utilisation des colorants à complexes métalliques définis selon les revendications 1 à 11 ou 15, ou obtenus selon les revendications 12 à 14.